(19) Europäisches Patentamt
European Patent Office
Office européen des brevets

(11) **EP 4 730 806 A1**

(12) **EUROPEAN PATENT APPLICATION**

(43) Date of publication:
**22.04.2026 Bulletin 2026/17**

(21) Application number: **24306702.2**

(22) Date of filing: **16.10.2024**

(51) International Patent Classification (IPC):
***H04N 19/583*** *(2014.01)* ***H04N 19/593*** *(2014.01)*

(52) Cooperative Patent Classification (CPC):
**H04N 19/583; H04N 19/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **CHEN, Ya**
  **35700 RENNES (FR)**
- **LE LEANNEC, Fabrice**
  **35830 BETTON (FR)**
- **DUMAS, Thierry**
  **35700 RENNES (FR)**
- **DOYEN, Didier**
  **35510 CESSON-SEVIGNE (FR)**

(74) Representative: **Interdigital**
**Immeuble ZEN 2**
**845 A, avenue des Champs Blancs**
**35510 Cesson-Sévigné (FR)**

(54) **OVERLAPPED BLOCK INTRA PREDICTION (OBIP)**

(57) A method for predicting a current block in a video using overlapped block intra prediction is provided, the current block being intra-coded, the method comprises obtaining a first prediction block using an intra mode determined for the current block, obtaining at least one second prediction block using a prediction mode determined for a neighboring block of the current block, and predicting the current block using an overlapped block intra prediction blending using the first prediction block and the at least one second prediction block for at least a part of the current block. Methods for encoding or decoding the current block based on the predicting are also provided as well as corresponding apparatuses.

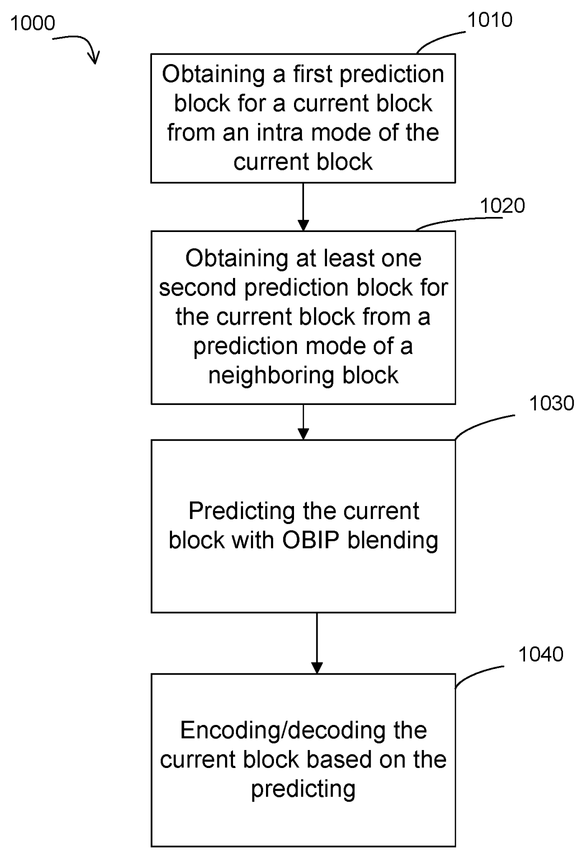


**FIG. 10**

EP 4 730 806 A1

## Description

### BACKGROUND

The present application is related to video compression. The present embodiments relate to a method and an apparatus for encoding or decoding an image or a video. More particularly, the present embodiments relate to improving intra prediction in video compression system.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### BRIEF SUMMARY

Briefly stated, in one embodiment, a method for encoding a current block in a video is provided wherein the current block is predicted using an overlapped block intra prediction blending.

In another embodiment, a method for decoding a current block in a video is provided wherein the current block is predicted using an overlapped block intra prediction blending.

In a further embodiment, an apparatus for encoding a video is provided wherein the apparatus comprises one or more processors configured to predict a current block of the video using an overlapped block intra prediction blending.

In a further embodiment, an apparatus for decoding a video is provided wherein the apparatus comprises one or more processors configured to predict a current block of the video using an overlapped block intra prediction blending.

In the above mentioned methods and apparatuses, a first prediction block using an intra mode determined for the current block is obtained, and at least one second prediction block is obtained for the current block using a prediction mode determined for a neighboring block of the current block, The current block is predicted using an overlapped block intra prediction blending using the first prediction block and the at least one second prediction block. The current block is encoded or decoded based on the predicting.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates an example of intra prediction direction as used in the VVC standard.

FIG. 5 illustrates examples of a template of a luminance CB and decoded reference samples of the template used in a template-based intra mode derivation (TIMD).

FIG. 6 illustrates an example of a matrix-based intra prediction process for a block of height H and width W.

FIG.7 illustrates an example of intra template matching (IntraTMP) search area.

FIG. 8 illustrates an example of OBMC prediction for an inter-coded block.

FIG. 9 illustrates an example of OMBCS extension for an inter-coded block having intra-coded neighboring block.

FIG. 10 shows a method for predicting a block, according to an embodiment.

FIG. 11 illustrates an example of a boundary area of a current block.

FIG. 12 illustrates an OBIP process for an intra-coded block with neighboring intra-coded blocks, according to an embodiment.

FIG. 13A-C illustrates examples of order of parsing of neighboring blocks of a current block.

FIG. 14 illustrates an OBIP process for a split block having intra-coded partitions, according to an embodiment.

FIG. 15 illustrates a subblock-wise OBIP process for an intra-coded block with neighboring intra-coded blocks, according to an embodiment.

FIG. 16A-C illustrates examples of subblocks size for subblock-wise OBIP process, according to an embodiment.

FIG. 17 illustrates an OBIP process for an intra-coded block with neighboring blocks coded using block vector, according to an embodiment.

FIG. 18A illustrates OBIP for a current block having intra-coded neighboring blocks and inter-coded neighboring blocks, according to an embodiment.

FIG. 18B illustrates OBIP for a current block having intra-coded neighboring blocks and inter-coded neighboring blocks, according to another embodiment.

FIG. 19 illustrates an example of a process for deriving a VIPM for an inter-coded block using a DIMD.

FIG. 20 illustrates an OBIP process for an BV-coded block with neighboring blocks coded using intra modes, according to an embodiment.

FIG. 21 shows two remote devices communicating over a communication network in accordance with an example of the present principles.

FIG. 22 shows the syntax of a signal in accordance with an example of the present principles.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C). The term "block" can be replaced in variants by "Coding Unit" (CU), "Coding Tree Unit" (CTU) or "Coding Block" (CB).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

An intra-coded block may be coded using an intra mode that generates a prediction block from reconstructed samples of a same picture to which the intra-coded block belongs. Some examples of intra modes are described below.

Core 67 intra prediction modes:

To capture the arbitrary edge directions presented in natural video, the number of directional intra prediction modes in VVC is extended from 33, as used in HEVC, to 65. FIG. 4 illustrates the directional intra prediction modes in VVC. Dotted lines show additional wide angular directional intra prediction. In addition to the directional intra prediction modes, a Planer mode and a DC mode are provided.

In the ECM implementation, the core structure of the intra prediction modes (IPM) is inherited from that in VVC. This core structure is refined in ECM wherein the four-tap interpolation for a directional intra prediction mode from VVC becomes a six-tap interpolation in ECM. Position Dependent Intra Prediction Combination (PDPC) is supplemented in ECM with a gradient PDPC.

A directional intra prediction mode, including the Planar mode and DC mode, are identified/signaled using an index associated to the intra prediction mode (IPM) as illustrated in an example in FIG. 4. In the following, such directional intra prediction mode could also be referred to as angular intra mode or IPM.

Template-based Intra Mode Derivation (TIMD)

For a given luminance Coding Block (CB) (503) in FIG. 5, the following modes derivation via TIMD applies the same way on the encoder and decoder sides. For each intra prediction mode in a Most Probable Mode (MPM) list constructed for this luminance CB, if needed, supplemented with default modes, the TIMD mode determines a prediction of the template (500 and 501) of the luminance CB (503) from the decoded reference samples (502) of the template, and the SATD (Sum Of Absolute Transformed Difference) between the predicted reference samples of the template and the decoded reference samples of the template of the luminance CB is determined. In a first pass, the two intra prediction modes with the minimum SATDs are selected as the TIMD modes. After retaining two intra prediction modes in the first pass involving the MPM list supplemented with default modes, for each of these two selected intra prediction modes, if this mode is neither PLANAR nor DC, TIMD also checks in terms of SATD cost, two closest extended directional intra prediction modes for the selected intra prediction modes.

To predict the current luminance CB via TIMD, the two intra predictions obtained from the two TIMD modes selected in the first or second pass for the luminance CB are fused with weights after applying PDPC. The used weights depend on the prediction SATDs of the two TIMD modes.

Matrix-based Intra Prediction (MIP)

Matrix-based Intra Prediction (MIP) method is an intra prediction technique introduced in VVC. For predicting the samples of a rectangular block of width *W* and height *H,* MIP takes one column of H reconstructed neighboring boundary samples on the left side of the current block and one line of *W* reconstructed neighboring boundary samples above the current block as input. If the reconstructed samples are unavailable, they are generated as done in the conventional intra prediction. The generation of the prediction signal is based on the following three steps: optional averaging of the reconstructed neighboring boundary samples, matrix vector multiplication between a MIP weight matrix and the averaged neighboring boundary samples, and optional linear interpolation of the result from the previous multiplication, as shown in FIG. 6.

Decoder side Intra Mode Derivation (DIMD)

When DIMD (Decoder Side Intra Mode Derivation) is applied, up to five angular intra modes are derived from gradients determined in a template of reconstructed neighbor samples, and those five predictors are combined with the planar mode predictor with weights derived from the histogram of gradients.

Intra Block Copy (IBC)

Intra block copy (IBC) is a tool adopted in HEVC extensions on SCC (Screen Content). IBC mode is implemented as a block level coding mode. Block matching (BM) is performed at the encoder to find an optimal block vector (or motion vector) for each CU. Here, a block vector is used to indicate the displacement from the current block to a reference block, which is already reconstructed inside the current picture. The block vector BV used for a block coded in the IBC mode is signaled to the decoder using an index signaling a BV in a candidate list or a BV difference from a BV predictor is signaled.

Intra template matching prediction (Intra TMP)

Intra template matching prediction (Intra TMP) is an intra prediction mode that copies the best prediction block from a reconstructed part of the current frame, whose L-shaped template matches the template of the block to predict. For a predefined search range, the encoder searches for the most similar template to the current template in a reconstructed part of the current frame and uses the corresponding block as a prediction block. The encoder then signals the usage of this mode, and the same prediction operation is performed at the decoder side.

The prediction signal is generated by matching the L-shaped causal neighbor of the current block with another block in a predefined search area (dashed area) as illustrating in FIG. 7 for example, the search area consisting of: R1from current CTU, R2 (top-left CTU), R3 (above CTU), R4 (left CTU). For example, SAD is used as a cost function. Within each region, the decoder searches for the template that has least SAD with respect to the current one and uses its corresponding block as a prediction block.

Occurrence-Based Intra Coding (OBIC)

The occurrence-based intra coding (OBIC) derives the intra prediction modes of a current block based on the sample-wise occurrence of the intra prediction modes (directional intra prediction modes also referred as angular intra modes) in the spatial neighborhood of the current block. For this, adjacent and non-adjacent spatial neighboring blocks are checked, and the directional intra prediction modes of the blocks are collected into an occurrence histogram. Instead of Histogram of Gradient (HoG) as in DIMD, the OBIC method uses the Histogram of occurrence (HoC), which consists of the angular intra modes and their sample-wise occurrences. The occurrence values are calculated based on the number of samples that are coded in a certain angular intra mode in that neighborhood. For example, if a uiWidth × uiHeight spatial neighboring block of the current block is coded with an IPM mode, the occurrence of the mode for this spatial neighboring block is given by uiWidth * uiHeight and its bin value in the histogram is calculated as: HoC[IPM] += uiWidth * uiHeight, where uiWidth and uiHeight are the width and height of the spatial neighboring block. The occurrences of the existing modes from the spatial neighborhood blocks are accumulated into the histogram.

Up to five angular intra modes with the highest occurrence along with the planar mode or block-vector based prediction (same as in DIMD) are selected from the HoC and used for obtaining the final prediction of the current block by blending the prediction of the selected modes.

It can happen that some neighboring blocks are coded using an intra prediction mode that uses more than one angular intra mode. In such cases, all the angular intra modes used for predicting such neighboring blocks are taken into account when constructing the OBIC histogram. Moreover, virtual intra prediction modes (VIPMs) are considered when creating the histogram of OBIC mode for intra modes that do not have an angular intra prediction mode, e.g. MIP, IntraTMP, IBC.

Spatial geometric partitioning mode (SGPM)

Spatial geometric partitioning mode (SGPM) is an intra mode that resembles the inter coding tool of geometric partitioning mode (GPM). In GPM, the block is split into two partitions by a geometrically located straight line, each partition is predicted with its own motion and a geometric partition index indicating the partition mode of the geometric partition (angle and offset) is signaled.

In SGPM mode, the prediction of each partition of the block is generated from an intra prediction process. In SGPM mode, a candidate list is built with each entry containing one partition split and two intra prediction modes. The candidate index selected from the list is signaled to the decoder.

Overlapped Block Motion Compensation (OBMC)

Overlapped block motion compensation (OBMC) aims at reducing the block artifacts which are inherent to every block-based video coding scheme. It performs a weighted average of overlapped block segments during motion prediction.

In normal whole-block-based uni-prediction without OBMC, a block is predicted by means of one motion vector (MV). In OBMC, the motion vector of a current block to predict and the motion vector of at least one neighboring block of the current block are considered in the motion-compensated prediction. For each sample to predict in the current block, the prediction of the sample consists in a weighted average of the prediction of the current sample with the current block's motion vector, and of the prediction of the current sample with the neighboring block's motion vector. The weights used in the weighted average can be set so that the weight used for the prediction obtained from the neighboring block's motion vector decreases when the distance of the current sample o the considered boundary increases. AS such, OMBC is used for samples close to the current blocks left and top boundaries.

Typically, for example shown in FIG. 8, for a sample close to the upper boundary of a current block C, the MV of the above blocks T0 and T1 may be considered in addition to the current block's MV. For a sample to predict inside the current block and close to the left boundary of the current block, the MV of the left neighboring block L may be considered in addition to the current block's MV. For a sample to predict near the upper and left boundaries of the current block, up to three MVs may be used to perform the prediction of the considered sample: the MV of the current block C, the MV of the above neighboring block T0 and the MV of left neighboring block L. For example, on FIG. 8, only samples (in grey area) to the left and top boundaries of the current block uses the weighted prediction with OMBC. Remaining samples of the current block are predicted with the prediction obtained from the current block's MV.

A subblock-boundary OBMC is performed by applying the same blending to the top, left, bottom, and right subblock boundary pixels using neighboring subblocks' motion information. When subblock-boundary OBMC applies to the current sub-block, besides current motion vectors, motion vectors of four connected neighboring sub-blocks, if available and not identical to the current motion vector, are also used to derive prediction block for the current sub-block. These multiple prediction blocks based on multiple motion vectors are combined to generate the final prediction signal of the current subblock.

Extension of OBMC with intra prediction

In the OBMC process described above, it is assumed that the neighboring block of the current block is an inter-coded block, such that the neighboring block has a MV.

In JVET-AI0154 ("Non-EE2: OBMC extension with intra prediction", Document JVET-AI0154, 35th Meeting, Sapporo, JP, 12-19 July 2024*),* it is proposed to extend OBMC, in a way which enables a refinement of top and left boundary samples of an inter block, which are adjacent to an intra block. In OBMC of the ECM-13.0 implementation described in JVET-AH2025 "Algorithm description of Enhanced Compression Model 13 (ECM13)"n M. Coban, R-L. Liao, K. Naser, J. Ström, L. Zhang, 34th meeting, Rennes, FR, 17-24 April 2024, top and left boundary samples of the current block are only blended with inter prediction block generated using motion information of neighboring block. However, the boundary samples adjacent to intra block are currently not refined because there is no motion information available for neighboring intra block. As a result, discontinuities may still be present at these boundary samples. To address this issue, in JVET-AI0154, it is proposed that these samples are blended using intra prediction block generated with an intra prediction mode derived by applying a decoder-side intra mode derivation (DIMD) on the neighboring reconstructed samples.

DIMD consists in deriving an angular prediction mode to predict a current intra block, based on the reconstructed samples located in top and left neighboring areas of the current block, called template area. A histogram of spatial gradient of reconstructed signal is built, so as to extract spatial directions most represented in the considered template. The extracted direction is then used to derive at least one angular prediction mode, which is then used to predict the current block coded in DIMD mode.

In JVET-AI0154, the intra prediction mode derived through the DIMD mechanism is invoked, for subblocks on the CU/block boundary, which adjacent block is intra coded.

The proposed extension of OBMC thus enables a refinement of top and left boundary samples adjacent to intra block, as shown by FIG. 9. In addition to the existing OBMC process, in the proposed extension, the top and left boundary samples adjacent to intra block are blended with intra prediction subblock generated using the intra prediction mode derived by applying DIMD on the neighboring reconstructed samples.

Embodiments described in this document provide an overlapped block intra prediction (OBIP) mode, which allows a weighted average of the prediction with current block's intra prediction mode (and/or block vector), and of the prediction with one or more neighboring block's intra prediction mode(s) (and/or block vectors, and/or motion vectors). Embodiments provided herein extends the OBMC concept to refine boundary samples of a non-inter block to deal with the discontinuity issue. Thanks to described embodiments, an overlapped block intra prediction (OBIP) mode is provided for intra prediction that reduces the discontinuities present at boundary samples of a block, which allows a weighted average of the prediction obtained with current block's intra prediction mode (and/or BV), and of the prediction obtained with the neighboring block's intra prediction mode(s) (and/or BVs, and/or MVs).

Some embodiments provide a whole-block-wise OBIP mode and a subblock-wise OBIP mode for an intra-coded block wherein neighboring block can be neighboring intra-coded blocks, neighboring blocks using BV, neighboring inter-coded blocks, in inter slice.

Some embodiments provide a whole-block-wise OBIP mode and a subblock-wise OBIP mode for a BV-coded block, with neighboring blocks using intra prediction mode.

Some embodiments provide for defining the boundary for applying the whole-block-wise OBIP mode and/or subblock-wise OBIP mode.

Some embodiments provide for choosing the intra prediction mode(s), and/or BV(s), and/or MV(s), and/or virtual intra prediction mode (VIPM), obtained from the neighboring blocks for applying a whole-block-wise OBIP mode and a subblock-wise OBIP mode.

Some embodiments provide for deciding the weight(s) used for applying a whole-block-wise OBIP mode and a subblock-wise OBIP mode.

Some embodiments provide for limiting the conditions for allowing a whole-block-wise OBIP mode and a subblock-wise OBIP mode.

Some embodiments provide for specializing the adaptation for allowing and applying a whole-block-wise OBIP mode and a subblock-wise OBIP mode on an intra-coded block, with multiple partitions, or with multiple intra prediction modes, or using matrix-based intra prediction mode.

FIG. 10 shows a method 1000 wherein a current block is intra-coded using an OBIP mode according to an embodiment. The method 1000 can be used for example in the encoder described in relation with FIG. 2 or the decoder described in relation with FIG. 3.

At 1010, a first prediction block is obtained using an intra mode determined for the current block. For example, on the decoding side, the intra mode of the current block is an intra mode signaled or derived for the current block. On the encoder side, the intra mode of the current block is the intra mode determined as the one that best predict the current block. The intra mode of the current block can be one of an intra prediction mode indicating a directional prediction in a set of directional predictions (IPM), a block-coded mode that uses a block vector or a matrix-based intra prediction mode. The intra mode can be any one of the intra modes described above.

At 1020, at least one second prediction block is obtained for the current block using a prediction mode determined for a neighboring block of the current block. In this step, the prediction mode used to code the neighboring block is used to determine a second prediction block for the current block by applying the prediction mode associated to the neighboring block to the current block. Depending on variants, more than one second prediction block can be obtained when several neighboring blocks are used.

Depending on variants, the prediction mode determined for the neighboring block can be an intra-coded block that uses any one of the intra modes described above (IPM, IBC, OBIC, TIMD, DIMD, SGPM, Intra TMP, MIP), or an inter-coded block. Depending on variants, the prediction mode can be a virtual intra prediction mode (VIPM) determined using a decoder side intra mode derivation (DIMD), for example when the neighboring block is not predicted with an intra mode that provides one or more IPM. In the case of a neighboring block that is inter-coded, depending on variants, the second prediction block can be obtained from a motion-compensated prediction obtained using motion data from the neighboring block or from an intra prediction obtained using a VIPM derived for the neighboring block.

In a variant, the neighboring block is selected among the neighboring blocks of the current block such that the second prediction block provided by the prediction mode associated with the neighboring block is different from the first intra prediction mode. In other words, if the neighboring block and the current block are associated with a same kind of intra mode, for example IPMs, the IPM associated to the neighboring block should be distinct from the IPM of the current block so as to provide distinct prediction blocks that can be blended.

In another variant, when the current block has a plurality of neighboring blocks along a top edge and/or left edge of the current block, the prediction mode of a neighboring block used to obtain the second prediction block can be selected by parsing the plurality of neighboring blocks along the top and/or left edge according to a given order and selecting the first neighboring block whose prediction mode is distinct from the intra mode of the current block.

In another variant, when the current block has a plurality of neighboring blocks along a top edge and/or left edge of the current block, the prediction mode of a neighboring block used to obtain the second prediction block can be selected by parsing the plurality of neighboring blocks along the top and/or left edge according to a given order and selecting the first neighboring block whose prediction mode uses a block vector.

In another variant, when the current block has a plurality of neighboring blocks along a top edge and/or left edge of the current block, the prediction mode of a neighboring block used to obtain the second prediction block can be selected as the prediction mode having the highest number of occurrences among the prediction modes provided by the neighboring blocks of the plurality of neighboring blocks.

In another variant, two or more of the variants mentioned above can be in combination, by checking successively the above criteria according to any order.

At 1030, the current block is predicted using an overlapped block intra prediction (OBIP) blending using the first prediction block and the at least one second prediction block. The OBIP is a weighted prediction that uses the first prediction block $P_{cur}(x,y)$ and the at least one second prediction block $P_{neigh}(x,y)$ for samples (x,y) of the current block. For example, the prediction of a sample (x,y) of the current block is formed as follows: $P(x,y) = P(x,y) = w_1 \times P_{cur}(x,y) + w_2 \times P_{neigh}(x,y)$, with $w_1$ and $w_2$ the weights associated with each prediction block.

Depending on the variants used, the samples (x,y) predicted using OBIP are located in a boundary area along an edge of the current block. FIG. 11 illustrates an example of a boundary area of the current block (shown in grey). The boundary area illustrated on FIG.11 includes samples of the current block in a top boundary area (samples close to the top edge of the current block) and samples of the current block in a left boundary area (samples close to the left edge of the current block). Depending on variants, the boundary area can include only the top boundary area or the left boundary area.

The boundary area can include a column of samples of the current block having a width $W_b$ adjacent to the left edge of the current block and/or a row of samples of the current block having a height $H_b$, adjacent to the top edge of the current block.

The size of the boundary area (i.e. values of $W_b$, $H_b$ ) can depend on some conditions, such as a size of the current block, a QP used for coding the current block, a color component, a slice type, or can be signaled in a bitstream.

For other samples not included in the boundary area, the prediction for these samples is obtained using the first prediction block. In some variants, the boundary area can include all samples of the current block.

When the current block is predicted with an intra mode that splits the current block into sub-partitions (e.g. SPGM), a second prediction block is obtained for each sub-partition using a prediction mode determined for a neighboring block of the sub-partition, and OBIP is applied to each sub-partition using the first prediction block obtained for the sub-partition using the intra mode determined for the sub-partition and the second prediction block determined for the sub-partition using the prediction mode of the neighboring block of the sub-partition block.

As described above, OBIP predicts a sample of the current block with a weighted prediction determined from a co-located sampled in the first prediction block and a co-located sample in the second prediction block. Depending on variants, the weights used in the weighted prediction can be determined by selecting the weights in sets of weights for example using a signaled index, by a ratio based on a size of the current block and a size of the neighboring block or based on a distance between the at least one sample to the neighboring block.

In a variant, the above steps of obtaining the second prediction block and predicting the current block using OBIP can be implemented a block-wise manner. That is all samples in the boundary area are predicted using the same second prediction block.

In another variant, the above steps of obtaining the second prediction block and predicting the current block using OBIP can be implemented a subblock-wise manner. In this variant, the boundary area is divided in subblocks, and the above steps are applied to each subblock. In this way, from one subblock to another, the second prediction block might be different as the neighboring blocks of the subblocks may be different. Examples of subblock-based OBIP is illustrated on FIG 16A-C.

At 1040, the current block is encoded or decoded using the prediction obtained at 1030.

High level signaling can be used to indicate whether OBIP is used or not. This signaling can be a flag signaling at a sequence level, picture level or slice level.

In a variant, at 1030, the use of OBIP for the current block can be enabled according to some criteria. For example, a flag signaled at the block level can indicate whether OBIP is used for the block. In another example, OBIP can be enabled for the current block if the size of the current block is above a given size. In another example, OBIP can be enabled for the current block if the size of the current block is below a given size.

Further embodiments are described below.

<u>Overlapped block intra prediction (OBIP) for an intra-coded block, with neighboring intra-coded blocks.</u>

In this embodiment, an overlapped block intra prediction (OBIP) mode for an intra-coded block, which considers at least one intra prediction mode (IPM) of the neighboring intra-coded blocks for the prediction of the samples in the current block is described.

Basically, for each sample in the left boundary and the upper boundary in an intra-coded block, the prediction of the sample consists in a weighted average of the prediction of current sample with current block's intra prediction mode, and of the prediction of current sample with the neighboring block's intra prediction mode(s).

Specifically, for example, for a sample to be predicted inside the current block and close to the upper boundary of current intra-coded block, the intra prediction mode of above neighboring block may be considered in addition to current block's intra prediction mode. For a sample to be predicted inside the current block and close to the left boundary of current block, the intra prediction mode of left neighboring block may be considered in addition to current block's intra prediction mode. For a sample to predict near upper and left boundaries of current block, up to three intra prediction modes may be used to perform the prediction of considered samples: the intra prediction mode of current block, the intra prediction mode of above neighboring block and the intra prediction mode of left neighboring block. In the description above, a sample of the current block that is located close or near to a left or top boundary is to be understood as a sample within the boundary area defined earlier, for example in relation with FIG. 11.

FIG. 12 shows an example of a method 1200 for intra prediction according to an embodiment, when OBIP is used. The method 1200 can be used for example in the encoder described in relation with FIG. 2 or the decoder described in relation with FIG. 3.

The input to the process is a current lock that is intra predicted block (Intra block). At 1210, the intra prediction mode information *IPM_cur* of the input intra-coded block is obtained. Then, at 1220, the current intra-coded block is predicted with this intra prediction mode *IPM_cur.*

At 1230, it is checked if OBIP is activated for the current intra-coded block. This can be done for example by checking if an OBIP flag is on or off. The OBIP flag can be signaled at a block level, picture level or sequence level. If OBIP is not activated or not allowed for the current intra-coded block, then the intra prediction process of the current block is complete. Otherwise, the following steps take place.

At 1240, a loop on the current intra-coded block boundaries/edges takes place. The neighboring intra-coded blocks of the current intra-coded block across the considered boundary are then considered. At 1250, coding information of a considered neighboring block is obtained. At 1260, a check is performed to see if the considered neighboring block is intra coded and if the intra prediction mode *IPM_neighb* of the considered neighboring block is equal to the intra prediction mode of current block *IPM_cur.* If equal, then at 1270, the process of FIG. 12 iterates to the next neighboring block. If the intra prediction mode *IPM_neighb* from all the available neighboring intra-coded blocks is identical to the intra prediction mode *IPM_cur* of the current block, then OBIP will not be applied to the current block.

Otherwise, if at 1260, the considered neighboring block is intra coded and its intra prediction mode *IPM neighb* is different from the intra prediction mode *IPM_cur* of current block, at 1280, the current block is predicted with the intra prediction mode found *IPM neighb.*

Therefore, if at least one available intra prediction mode *IPM neighb* is found along the boundary, and which is also different from the intra prediction mode *IPM_cur* of current block, then at 1280, the current block is predicted with the intra prediction mode found *IPM neighb.* At 1290, OBIP is applied for the current block along the considered boundary, with a weighted average of the prediction of current sample with current block's intra prediction mode *IPM_cur* obtained at 1220 and of the prediction of current sample with the found intra prediction mode(s) *IPM neighb* obtained at 1280. In a variant, all neighboring blocks that satisfy the condition at 1260, are used to obtain a prediction for the current block at 1280 and obtain the final blended prediction at 1290.

In one variant of third embodiment, about the boundary area for applying OBIP blending, only samples in the first left column and the first top row of the current block are considered for OBIP blending at 1290.

Alternatively, samples in the first *N* left columns and the first *M* top rows of the current block are considered as the boundary area for applying OBIP blending. The value of *N* and *M* can be adaptively set based on some conditions/parameters, such as block size, QP, color components, slice types, content types, frame resolution and configuration; or the value of *N* and *M* can be fixed and signaled in sequence parameter set (SPS) / view parameter set (VPS) / picture parameter set (PPS) / picture header (PH) / slice header (SH) / sub-picture level syntax element / coding tree unit (CTU) level syntax element.

Alternatively, samples within the same block size of the corresponding neighboring block, whose intra prediction mode is chosen as the one used for OBIP blending, could be considered as the boundary for applying OBIP. In case that the corresponding neighboring block size is larger than the current block size, all the samples in the current block could be considered for applying OBIP.

In another variant of this embodiment, about the intra prediction mode(s) *IPM neighb* obtained from the neighboring blocks used for OBIP, only the first intra prediction mode obtained from the first neighboring block in a predefined order that satisfies that condition at 1260, and not identical to the intra prediction mode *IPM_cur* of the current block is considered. For example, a predefined order is illustrated on FIG. 13C, (number inside the neighboring blocks indicates the parsing order) which starts with the first top neighboring block. If this intra prediction mode *IPM_neighb* is equal to the intra prediction mode *IPM_cur* of the current block, then the intra prediction mode *IPM neighb* obtained from the next neighboring block in the predefined order (as shown in FIG. 13C, which is the first left neighboring block) could be checked, until an intra prediction mode satisfying the conditions is found.

Alternatively, one intra prediction mode *IPM neighb* from the first left neighboring block in a predefined order and not identical to the intra prediction mode of the current block is considered for OBIP blending on the left boundaries; and another intra prediction mode from the first above neighboring block in a predefined order and not identical to the intra prediction mode of the current block is considered for OBIP blending on the upper boundaries, separately. For example, FIG. 13A and FIG. 13B illustrates example of predefined order for left edge and top edge respectively according to this variant. Some samples might be located in the overlapped area (e.g., the top-left sample of the current block), intra prediction modes from both left and above neighboring blocks could be allowed to get the OBIP intra predictions of those samples.

Alternatively, only one intra prediction mode *IPM neighb* from the neighboring blocks with the highest occurrences and not identical to the intra prediction mode *IPM_cur* of the current block is considered. If the intra prediction mode *IPM_neighb* with highest occurrences is equal to the intra prediction mode of the current block, then the intra prediction mode with second highest occurrences could be checked, until the qualified one is found. The occurrences of the neighboring intra prediction modes could be calculated either based on the number of blocks that are coded in a certain intra prediction mode or based on a number of samples that are coded in a certain intra prediction mode.

Some intra-coded neighboring blocks use more than one intra mode for prediction, such as DIMD / occurrence-based intra coding (OBIC) / fusion for template-based intra mode derivation (TIMD) / spatial geometric partitioning mode (SGPM). In such cases, all the intra modes of such blocks are selected and used for choosing the intra prediction mode used for OBIP. For example, up to 2 intra prediction modes from SGPM could be selected.

Alternatively, one intra prediction mode from the left neighboring blocks with the highest occurrences and not identical to the intra prediction mode of the current block is considered for OBIP blending on the left boundaries; and another intra prediction mode from the above neighboring blocks with the highest occurrences and not identical to the intra prediction mode of the current block is considered for OBIP blending on the upper boundaries, separately. Some samples might be located in the overlapped area (e.g., the top-left sample of the current block), intra prediction modes from both left and above neighboring blocks could be allowed to get the OBIP intra predictions of those samples.

In another variant of this embodiment, the weight(s) used for OBIP blending could be either simply equal weighting (i.e., ½ and ½), or some predefined fix weight values (i.e., ¼ for the prediction with neighboring block's intra prediction mode(s), % for the prediction with current block's intra prediction mode).

Alternatively, the weight(s) used for OBIP blending could be selected from several predefined weight sets (e.g., {½ , ½}, {¼ , ¾}, {1/8 , 7/8}), and then signaled with one syntax indicating the OBIP weight index.

The value(s) of the weight(s), or the weight sets, used for OBIP blending can be predefined and signaled in SPS/VPS/PPS/PH/SH/sub-picture level syntax element/CTU level syntax element.

Alternatively, the weight(s) used for OBIP blending could be adaptively derived based on some conditions/parameters, such as block size. Specifically, the OBIP weights could be derived from the block size of the corresponding neighboring block, whose intra prediction mode is chosen as the one used for OBIP blending. For example, the weight could be the ratio of the block size of the corresponding neighboring block to the block size of the current block: $\frac{width_{neighb} \times height_{neighb}}{width_{current} \times height_{current}}$, where $width_{neighb}$ $height_{neighb}$ are the width and height of the neighboring block and $width_{current}$ $height_{current}$ are the width and height of the current block.

Another example, the OBIP blending weight used for left boundaries could be the ratio of the height of the corresponding neighboring block to the height of the current block $\frac{height_{neighb}}{height_{current}}$; similarly, the OBIP blending weight used for upper boundaries could be the ratio of the width of the corresponding neighboring block to the width of the current block $\frac{width_{neighb}}{width_{current}}$.

Besides the block size, QP, color components, slice types, content types, frame resolution and configuration could be considered to adaptively derive the weight(s) used for OBIP blending.

Alternatively, the weight(s) used for OBIP blending could be position-based. Specifically, the weight(s) could be gradually reduced as the samples becoming far away from the left boundary and/or above boundary.

In another variant of this embodiment, the condition for allowing OBIP for the current block could be based on the comparison between the intra prediction mode of the current block (i.e., $IPM_{cur}$) and the chosen blending intra prediction mode of the neighboring block(s) (i.e., $IPM_{blending}$ selected at 1260). For example, OBIP could be only allowed and applied for the current block when these intra prediction modes are not very far away from each other, for example by comparing their signaling index. In this variant, OBIP could be allowed if the absolute value difference is lower than a predefined value *Th* (e.g., $|IPM_{cur} - IPM_{blending}| < Th$).

Another example, in a reverse way, OBIP could be only allowed and applied for the current block when these intra prediction modes are very far away from each other, for example OBIP could be allowed if the absolute value difference is higher than a predefined value *Th.*

Alternatively, activating OBIP could be based on some conditions/parameters, such as block size, intra mode (such as DIMD/OBIC/TIMD/SGPM), QP, color components, slice types, content types, frame resolution and configuration; or be signaled in SPS/VPS/PPS/PH/SH/sub-picture level syntax element/CTU level syntax element/block level syntax element/sub-block level syntax element. For example, OBIP could be only allowed and applied when the size of the current block is larger than some predefined threshold (e.g., $(width_{current} \times height_{current}) > 8 \times 8$). Another example, an OBIP flag indicating the activation of OBIP could be signaled on the block level, which could be decided by some SAD/SATD/RDO check at the encoder side.

Another variant of this embodiment relates to applying OBIP on an intra-coded block with multiple partitions (e.g., SGPM), i.e. the current block is intra coded using an intra mode that splits the current block into multiple partitions. In this variant, OBIP could be performed on each sub-partition of the current block separately. As an example, shown in FIG. 14, the intra prediction mode of the first sub-partition of the current SGPM block (i.e., $IPM_{cur_0}$) and the chosen blending intra prediction mode used for the first sub-partition could only be obtained from the neighboring blocks adjacent to the first sub-partition. Then the condition for allowing OBIP on the first sub-partition could be based on the comparison between $IPM_{cur_0}$ and the chosen blending intra prediction mode used for the first sub-partition from the corresponding neighboring blocks (i.e., $IPM_{blending_0}$). If OBIP is allowed for the first sub-partition, then OBIP is applied along the considered boundary of the first sub-partition (left edge and part of top edge in the example illustrated on FIG. 14), with a weighted average of the prediction of samples inside the first sub-partition with $IPM_{cur_0}$ and of the prediction of samples inside the first sub-partition with the found $IPM_{blending_0}$. Similar process is performed for the second sub-partition of the current SGPM block with $IPM_{cur_1}$ the intra prediction mode of the second sub-partition and $IPM_{blending_1}$ the intra prediction mode of the neighboring block found for the second sub-partition.

Alternatively, OBIP is not allowed if the current block is coded with multiple partitions (e.g., SGPM).

Another variant of this embodiment relates to OBIP on an intra-coded block using multiple intra prediction modes (e.g., DIMD/OBIC/TIMD), i.e. the current block is intra coded using an intra mode that uses multiple intra prediction modes. In this variant, OBIP could either be based on the comparison between the main dominated intra prediction mode of the current block (the intra prediction mode that provides the lowest cost for example or found first for the current block) and the chosen blending intra prediction mode from the neighboring blocks; or be based on the comparison between all the intra prediction modes of the current block and the chosen blending intra prediction mode from the neighboring blocks.

Alternatively, OBIP is not allowed if the current block is coded with multiple intra prediction modes (e.g., DIMD/OBIC/TIMD).

Another variant of this embodiment relates to OBIP applied when the current block is an intra-coded block using matrix-based intra prediction mode (e.g., matrix-based Intra Prediction (MIP) / matrix based intra prediction replacing conventional intra modes (PDP)). In this variant, the criterion to allow OBIP for the current block could be based on the comparison between an approximate (or a mapped) intra prediction mode of the current block and the chosen blending intra prediction mode from the neighboring blocks. In other words, an intra prediction mode for the current block coded using MIP is derived so that it can be compared at 1260 with the chosen blending intra prediction mode from the neighboring blocks. The derivation of an IPM for a MIP mode can be made for example using DIMD to approximate an IPM. In other examples, hard-coded mapping between MIP modes and IPM can be defined.

Alternatively, OBIP is not allowed if the current block is coded with matrix-based intra prediction mode (e.g., MIP/PDP).

Subblock-wise overlapped block intra prediction (OBIP) for an intra-coded block, with neighboring intra-coded blocks

To further improve the prediction quality, another embodiment proposes a subblock-wise OBIP mode for an intra-coded block, which considers multiple intra prediction modes of the neighboring intra-coded blocks for the prediction of the samples in the current block.

Rather than selecting one intra prediction mode from the neighboring blocks used for the OBIP prediction of the considered boundaries; or selecting one intra prediction mode from the left neighboring blocks used for the OBIP prediction of the considered left boundaries, and another one from the above neighboring blocks used for the considered upper boundaries; the chosen intra prediction mode used for the OBIP prediction of the considered boundaries could be varied from subblock to subblock of the current intra-coded block.

FIG. 15 illustrates an example of a method 1500 for intra prediction according to this embodiment, when subblock-wise OBIP is used. The method 1500 can be used for example in the encoder described in relation with FIG. 2 or the decoder described in relation with FIG. 3.

The process is the same as the one described in relation with FIG. 12 with the difference that the process to identify the neighboring block for OBIP blending is done subblock by subblock along the top and left boundary/edge of the current block.

The input to the process is a current lock that is intra predicted block (Intra block). At 1510, the intra prediction mode information *IPM_cur* of the input intra-coded block is obtained. Then, at 1515, the current intra-coded block is predicted with this intra prediction mode *IPM_cur.* At 1520, it is checked if OBIP is activated for the current intra-coded block. If OBIP is not activated or not allowed for the current intra-coded block, then the intra prediction process of the current block is complete. Otherwise, the following steps take place.

At 1525, a current subblock of a size wxh along the considered boundary is considered. At 1530, a loop on the current subblock boundaries/edges takes place. The neighboring intra-coded blocks of the current subblock across the considered boundary are then considered. At 1535, coding information of a considered neighboring block is obtained. At 1540, a check is performed to see if the considered neighboring block is intra coded and if the intra prediction mode *IPM_neighb* of the neighboring block is equal to the intra prediction mode of current block *IPM_cur.* If equal, then at 1545, the process of FIG. 15 iterates to the next neighboring block of the subblock. If the intra prediction mode *IPM neighb* from all the available neighboring intra-coded blocks of the current subblock is identical to the intra prediction mode *IPM_cur* of the current block, then OBIP will not be applied to the current subblock.

Otherwise, if at 1540, the considered neighboring block is intra coded and its intra prediction mode *IPM neighb* is different from the intra prediction mode *IPM_cur* of current block, at 1550, the current subblock is predicted with the intra prediction mode found *IPM neighb.*

Therefore, if at least one available intra prediction mode *IPM neighb* is found along the boundary, and which is also different from the intra prediction mode *IPM_cur* of current block, then at 1550, the current block is predicted with the intra prediction mode found *IPM neighb.* At 1555, OBIP is applied for the current subblock along the considered boundary, with a weighted average of the prediction of current sample with current block's intra prediction mode *IPM_cur* obtained at 1515 and of the prediction of current sample of the current subblock with the found intra prediction mode(s) *IPM neighb* obtained at 1550.

For example, as illustrated in FIG. 16A, a subblock 1600 with size wxh is define and the boundary are in the current block is split into subblocks of size wxh (with adaptation as subblock size at boundaries when the subblock size is not multiple to the size of current block). FIG. 16A illustrates the results of subblock-based OBIP blending when all subblocks in the current block have a same size.

In another example illustrated on FIG. 16B, the intra prediction mode from the first above neighboring block of the current block, could be used for the OBIP prediction of the samples in the considered upper boundary with the same width of this first above neighboring block; then the process iterates to next upper boundary samples, which means the intra prediction mode from the second successive above neighboring block of the current block could be used for the OBIP prediction of the samples in the considered upper boundary with the same width of this second above neighboring block; and so one. Once the loop on upper boundary is done, the similar process is done to perform on the left boundary. In this variant, the length of the subblock along the direction that is shared with the neighboring block is the same as the one of the neighboring block.

In other words, in this variant illustrated on FIG. 16B, the subblock size for applying subblock-wise OBIP, in case of upper boundary being processed, the size of a subblock could be $width_{neighb} \times h$; and in case of left boundary being processed, the size of a subblock could be $w \times height_{neighb}$.

The value of h and w can be adaptively set based on some conditions/parameters, such as block size, QP, color components, slice types, content types, frame resolution and configuration; or the value of h and w can be fixed and signaled in SPS/VPS/PPS/PH/SH/sub-picture level syntax element/CTU level syntax element.

Alternatively, the subblock size could vary and use the same block size of each corresponding neighboring block, whose intra prediction mode is chosen for the subblock-wise OBIP.

As illustrated on FIG. 16B, some samples might be located in the overlapped subblocks (e.g., the top-left sample of the current block), intra prediction modes from both left and above corresponding neighboring blocks could be allowed to get the subblock-wise OBIP intra predictions of those samples.

In another variant of this embodiment, the weight(s) used for subblock-wise OBIP blending could either be one single weight/weight set; or be varying and adapting to each corresponding neighboring block.

All the aforementioned variants of the embodiment described above could be applied to the subblock-wise OBIP mode.

<u>OBIP for an intra-coded block, with neighboring blocks using block vector (BV)</u>

In the embodiments described above in relation with FIG. 12 and FIG. 15, it is assumed that neighboring blocks are intra coded using intra prediction modes IPM.

Therefore, in subblock-based OBIP, the boundary samples adjacent to neighboring blocks that are coded using intra block copy (IBC) coded or/and inter coded block are currently not refined because there is not always intra prediction mode information available from neighboring IBC-coded or/and inter-coded block. As a result, discontinuities may still be present at these boundary samples. Also, in whole block based OBIP, there may be no neighboring block having intra prediction modes and therefore the current block is not predicted with OBIP.

In addition to the two previous embodiments, this embodiment proposes to extend the OBIP mode, or/and the subblock-wise OBIP mode, for an intra-coded block, which considers at least one block-vector (BV) of the neighboring blocks using BV (e.g., IBC/ intra template matching(IntraTMP) / GPM-inter-IBC block, or DIMD/OBIC/TIMD/SGPM block coded with at least one BV) for the prediction of the samples in the current block.

As shown in FIG. 16C in the subblock-based OBIP mode, for each sample in the left boundary and the upper boundary in an intra-coded block, the prediction of the sample consists in a weighted average of the prediction of current sample with current block's intra prediction mode, and of the prediction of current sample with the neighboring block's BV(s) when the neighboring block is coded using an intra mode that uses a BV (e.g. IBC0 and IBC1 in FIG. 16C) and/or with the neighboring block's intra prediction mode when the neighboring block is coded using an intra mode that uses one or more IPM (e.g. Intra0, Intra1, Intra 2 in FIG. 16C).

Specifically, for example, for a sample to be predicted inside the current block and close to the upper boundary of current intra-coded block, the BV of above neighboring block may be considered in addition to current block's intra prediction mode. For a sample to be predicted inside the current block and close to the left boundary of current block, the BV of left neighboring block may be considered in addition to current block's intra prediction mode. For a sample to predict near upper and left boundaries of current block, up to two BVs and one intra prediction mode may be used to perform the prediction of considered samples: the intra prediction mode of current block, the BV of above neighboring block and the BV of left neighboring block.

FIG. 17 illustrates a method 1700 for predicting a current block with OBIP according to this embodiment, when OBIP is used with neighboring blocks using BV. The method 1700 can be used for example in the encoder described in relation with FIG. 2 or the decoder described in relation with FIG. 3

The process is the same as the one described in relation with FIG. 12 and FIG. 15 with the difference that the process to identify the neighboring block for OBIP blending also checks if a neighboring block is coded with a BV.

The input to the process is a current lock that is intra predicted block (Intra block). At 1710, the intra prediction mode information *IPM_cur* of the input intra-coded block is obtained. Then, at 1715, the current intra-coded block is predicted with this intra prediction mode *IPM_cur.* At 1720, it is checked if OBIP is activated for the current intra-coded block. If OBIP is not activated or not allowed for the current intra-coded block, then the intra prediction process of the current block is complete. Otherwise, the following steps take place.

At 1725, a loop on the current intra-coded block boundaries takes place. The neighboring blocks of current intra-coded block across the considered boundary are then considered. At 1735, coding information of the considered neighboring is obtained. At 1740, a check is performed to see if the considered neighboring block is intra coded and if the intra prediction mode *IPM_neighb* of the neighboring block is equal to the intra prediction mode of current block *IPM_cur.* If the condition at 1740 is satisfied, then at 1755, the current block is predicted with the intra prediction mode found *IPM neighb.*

Otherwise, if the condition at 1740 is not satisfied, at 1745, it is checked if the neighboring block is coded with BV(s). For example, the neighboring block is coded with IBC/IntraTMP/GPM-inter-IBC could be checked, and/or if neighboring block is DIMD/OBIC/TIMD/SGPM coded with at least one BV, could be checked. If no BV is found in this neighboring block, then the process of FIG. 17 iterates to next neighboring block at 1730.

Otherwise, if at least one available BV is found along the boundary, at 1750, the current block is predicted with the BV found.

At 1760, OBIP is applied for the current block along the considered boundary, with a weighted average of the prediction of current sample with current block's intra prediction mode and of the prediction of current sample obtained at 1755 or 1750.

In another variant described with FIG. 17, BV(s) obtained from the neighboring blocks is used for the OBIP or/and the subblock-wise OBIP blending of the current block, only if there's no qualified intra prediction mode found at 1740 for any neighboring blocks. In this variant, a first loop checks if there is at least one neighboring block that is intra-coded with an IPM different from the IPM of the current block. Then, if no neighboring block is found, a second loop checks if there is at least one neighboring block that is coded with BV(s).

In another variant, step 1745 is checked first for all neighboring blocks. In this variant, a first loop checks if there is at least one neighboring block that is coded with BV(s). Then, if no neighboring block is found, a second loop checks if intra-coded with an IPM different from the IPM of the current block.

In one variant of this embodiment, both intra prediction mode(s) and BV(s) obtained from the neighboring blocks could be used for the OBIP or/and the subblock-wise OBIP blending. In this variant, a first loop checks if there is at least one neighboring block that is intra-coded with an IPM different from the IPM of the current block. Then, even if a neighboring block is found in the first loop, a second loop checks if there is at least one neighboring block that is coded with BV(s). Then, at 1760, the OBIP blending is applied as a weighted average of the prediction of current sample with current block's intra prediction mode and of the predictions of the current sample obtained at 1755 and at 1750.

In another variant of this embodiment, only BV(s) obtained from the neighboring blocks are used for the OBIP or/and the subblock-wise OBIP blending. Therefore, in this variant, step 1740 of FIG. 17 is not done.

In another variant of this embodiment, about the BV(s) obtained from the neighboring blocks used for OBIP, only the first BV found from the neighboring blocks in a predefined order (for example as shown in FIG. 13A-C) is considered. Alternatively, the first BV found from the left neighboring blocks in a predefined order is considered for OBIP blending on the left boundaries; and another first BV found from the above neighboring blocks in a predefined order is considered for OBIP blending on the upper boundaries, separately. Some samples might be located in the overlapped area (e.g., the top-left sample of the current block), BVs from both left and above neighboring blocks could be allowed to get the OBIP intra predictions of those samples.

Alternatively, BV from the neighboring block coded with IBC/IntraTMP has higher priority than BV from the neighboring block coded with DIMD/OBIC/-TIMD/SGPM/GPM-inter-IBC, for OBIP mode. In this variant, the predefined order for parsing the neighboring blocks thus depends on the intra mode used by the neighboring blocks.

In another variant of this embodiment, when a neighboring block uses multiple BVs (e.g., IBC-GPM/Bi-IBC/TIMD), all the BVs from the neighboring blocks could be considered for the prediction of the current block.

In another variant of this embodiment, when a neighboring block uses multiple partitions (e.g., IBC-GPM/SGPM/GPM-inter-IBC), the BV to use for the current block could be based on sub-partition of the neighboring block, which is adjacent to the current block.

For example, for a neighboring block is coded with SGPM, if its sub-partition coded with BV is adjacent to the current block, a weighted average of the prediction of current sample with current block's intra prediction mode, and of the prediction of current sample with the neighboring block's BV, could be the final OBIP or subblock-wise OBIP prediction; or if its sub-partition coded with intra prediction mode is adjacent to the current block, a weighted average of the prediction of current sample with current block's intra prediction mode, and of the prediction of current sample with the neighboring block's intra prediction mode, could be the final OBIP or subblock-wise OBIP prediction; or if its sub-partition coded with BV and its sub-partition coded with intra prediction mode are both adjacent to the current block, then OBIP or subblock-wise OBIP could be performed with boundaries adjacent to the corresponding sub-partition separately.

All the aforementioned variants of the previous embodiments could be adjusted and be applied to this embodiment.

<u>OBIP for an intra-coded block in inter slice, with neighboring inter-coded blocks.</u>

This embodiment proposes to extend the OBIP mode, or/and the subblock-wise OBIP mode, for an intra-coded block in inter slice (i.e., B/P slice), which considers at least one motion-vector (MV) of a neighboring inter-coded blocks for the prediction of the samples in the current block.

As shown in FIG. 18A, in the subblock-based OBIP mode, for each sample in the left boundary and the upper boundary in an intra-coded block, the prediction of the sample consists in a weighted average of the prediction of current sample with current block's intra prediction mode, and of the prediction of current sample with the neighboring block's MV(s) (Inter0, Inter2) when the neighboring block is inter coded or of the prediction of current sample with current block's intra prediction mode, and of the prediction of current sample with the neighboring block's intra prediction mode (Intra0, Intra1, Intra2) when the neighboring block is intra coded.

In another embodiment, it is proposed to extend the OBIP mode, or/and the subblock-wise OBIP mode, for an intra-coded block in inter slice (i.e., B/P slice), which considers at least one virtual intra prediction mode (VIPM) of the neighboring inter-coded blocks for the prediction of the samples in the current block. In this other embodiment, the MV of the neighboring inter-coded block is not used for predicting the samples in OBIP but a virtual intra prediction mode derived for the neighboring inter-coded block.

In JVET-AF0082 ("Non-EE2: on LFNST/NSPT for inter coding", Document JVET-AF0082, 32nd Meeting, Hannover, DE, 13-20 October 2023), a virtual intra prediction mode (VIPM) is employed for an inter-coded block. Each VIPM represents a kind of feature of this inter-coded block, for example, a dominant direction. The VIPM can be derived by applying a DIMD-like process to an inter prediction block as shown in FIG. 19.

As shown in FIG. 18B, for each sample in the left boundary and the upper boundary in an intra-coded block, the prediction of the sample consists in a weighted average of the prediction of current sample with current block's intra prediction mode, and of the prediction of current sample with the neighboring block's VIPM when the neighboring block is inter-coded (Inter0, Inter2), and of the prediction of current sample with the neighboring block's intra prediction mode (Intra0, Intra1, Intra2) when the neighboring block is intra coded.

In one variant of this embodiment, rather than using VIPM, a "propagated" intra prediction mode of the neighboring inter blocks could be used for the OBIP or/and the subblock-wise OBIP blending. The "propagated" intra prediction mode refers to the selected intra prediction mode of this neighboring inter-coded block's reference block, if the reference block is intra coded. If the reference block is inter-coded, its "propagated" intra prediction mode is picked instead.

All the aforementioned variants of the previous embodiments could be adjusted and be applied to these two described embodiments for neighboring inter-coded blocks.

OBIP for a BV-coded block, with neighboring blocks using intra prediction mode.

This embodiment proposes to extend the OBIP mode, or/and the subblock-wise OBIP mode, for a current block that is a BV-coded block (e.g., IBC/IntraTMP/GPM-inter-IBC block), which considers at least one intra prediction mode of the neighboring blocks using intra prediction mode (e.g., Intra-coded/IBC-GPM/GPM-intra block) for the prediction of the samples in the current block.

Specifically, for example, for a sample to be predicted inside the current block and close to the upper boundary of current intra-coded block, the intra prediction mode of above neighboring block may be considered in addition to current block's BV. For a sample to be predicted inside the current block and close to the left boundary of current block, the intra prediction mode of left neighboring block may be considered in addition to current block's BV. For a sample to predict near upper and left boundaries of current block, up to two intra prediction modes and one BV may be used to perform the prediction of considered samples: the BV of current block, the intra prediction mode of above neighboring block and the intra prediction mode of left neighboring block.

FIG. 20 illustrates a method 2000 for predicting a current block with OBIP according to this embodiment. The method 2000 can be used for example in the encoder described in relation with FIG. 2 or the decoder described in relation with FIG. 3.

For example, the input to the process is an IBC-coded block. At 2010, the BV information of the input IBC-coded block is obtained. At 2020, the current IBC-coded block is predicted with this BV. At 2030, a check if OBIP is activated for current IBC-coded block is performed, i.e. if the OBIP flag is on or off. If OBIP is not activated or not allowed for current IBC-coded block, then the IBC prediction process of FIG. 20 is complete. Otherwise, the following steps take place.

At 2040, a loop on the current IBC-coded block boundaries takes place. The neighboring intra-coded blocks of current IBC-coded block across the considered boundary are then considered. At 2050, coding information of a considered neighboring block is obtained. At 2060, a check is performed to see if the considered neighboring block is including at least one intra prediction mode. If not, then the process of FIG. 20 iterates to next neighboring block at 2070. If all the available neighboring blocks have no qualified intra prediction mode information, then OBIP will not be applied to the current block. Otherwise, if at least one available intra prediction mode is found along the boundary (yes at 2060), then at 2080 a prediction of the current block with the intra prediction mode of the neighboring block is obtained. At 2090, OBIP is applied for the current block along the considered boundary, with a weighted average of the prediction of current sample with current block's BV and of the prediction of current sample with the found intra prediction mode(s).

Another embodiment proposes to extend the OBIP mode, or/and the subblock-wise OBIP mode, for a BV-coded block (e.g., IBC/IntraTMP/GPM-inter-IBC block) in inter slice (i.e., B/P slice), which considers at least one VIPM, or one "propagated" intra prediction mode, of the neighboring inter-coded blocks for the prediction of the samples in the current block.

All the aforementioned variants described above for the previous embodiments could be adjusted and be applied to these two described embodiments where the current block is coded with a BV.

In an embodiment, illustrated in FIG. 21, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 22 shows an example of the syntax of a signal transmitted over a packet-based transmission protocol. Each transmitted packet P comprises a header H and a payload PAYLOAD. In some embodiments, the payload PAYLOAD may comprise data representative of an image or a video encoded according to any one of the embodiments described above. The payload can also comprise any signaling as described above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above. One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, which can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

**1.** A method comprising, for a current block of a video, the current block being intra-coded:

obtaining a first prediction block using an intra mode determined for the current block,
obtaining at least one second prediction block using a prediction mode determined for a neighboring block of the current block,
predicting the current block using an overlapped block intra prediction blending using the first prediction block and the at least one second prediction block,
encoding or decoding the current block based on the predicting.

**2.** The method of claim 1, wherein the overlapped block intra prediction blending is a weighted prediction that uses the first prediction block and the at least one second prediction block for at least one sample of the current block located in a boundary area along an edge of the current block.

**3.** The method of claim 1 or 2, wherein the at least one sample of the current block belongs to at least one of a top boundary area of the current block or a left boundary area of the current block.

**4.** The method of claim 2, wherein the boundary area is one of: a left column of samples of the current block having a given width, a first top row of samples of the current block having a given height, the given width and the given height being at least 1 and up to a width or a height of the current block or of the neighboring block.

**5.** The method of any one of claims 1-4, wherein the prediction mode determined for the neighboring block is one of an intra prediction mode (IPM), an intra block coded mode (IBC), an inter prediction mode, a virtual intra prediction mode (VIPM) determined using a decoder side intra mode derivation (DIMD), an occurrence-based intra coding mode (OBIC), a template-based intra mode (TIMD), a spatial geometric partitioning mode (SGPM).

**6.** The method of any one of claims 1-5, wherein the neighboring block belongs to a set of neighboring blocks along a boundary of the current block, and wherein obtaining the at least one second prediction block comprises selecting an intra prediction mode associated to the prediction mode of the neighboring block responsive to a determination that the neighboring block is a first neighboring block whose intra prediction mode is distinct from an intra prediction mode associated to the intra mode of the current block when considering the neighboring blocks of the set in a predefined order.

**7.** The method of any one of claims 1-5, wherein the neighboring block belongs to a set of neighboring blocks along a boundary of the current block, and wherein obtaining the at least one second prediction block comprises selecting the prediction mode of the neighboring block responsive to a determination that the neighboring block is a first neighboring block whose prediction mode uses a block vector when considering the neighboring blocks of the set in a predefined order.

**8.** The method of any one of claims 1-5, wherein the neighboring block belongs to a set of neighboring blocks along a boundary of the current block, and wherein obtaining the at least one second prediction block comprises selecting a prediction mode having a highest number of occurrences among prediction modes determined for the neighboring blocks of the set which is distinct from the intra mode of the current block.

**9.** The method of any one of claims 1-8, wherein the prediction mode and the intra mode are intra prediction modes identified using indexes representative of directional predictions, wherein using, for the at least one sample of the current block, the first prediction block and the at least one second prediction block, when predicting the current block, is responsive to a determination that an absolute value of a difference between an index of the intra mode of the current block and an index of the prediction mode is below a given value.

**10.** The method of claim 9, wherein the intra mode is an intra mode providing a plurality of intra prediction modes to predict the current block and wherein the index of the intra mode is the index of the intra prediction mode among the plurality of intra prediction modes that is a first intra prediction mode provided by a DIMD or that has a highest number of occurrences when the intra mode is OBIC, or that is a first intra prediction mode provided by a TIMD.

**11.** The method of claim 9, wherein the intra mode is a matrix-based intra prediction (MIP) mode and wherein the index of the intra mode is an index of a mapped intra prediction mode.

**12.** The method of any one of claims 1-11, wherein the overlapped block intra prediction (OBIP) is a sub-block-wise OBIP.

**13.** The method of claim 12, wherein the current block has a plurality of neighboring blocks along an edge of the current block, and a plurality of second prediction blocks is used in predicting the current block in addition to the first prediction block, the plurality of second prediction blocks being obtained from prediction modes of the plurality of neighboring blocks, a second prediction block of the plurality of second prediction blocks is used in predicting the current block for samples of the current block that are located in a boundary area inside the current block and adjacent to the neighboring block from which the second prediction block is obtained, the boundary area having a length along the edge that is a size of the neighboring block along the edge.

**14.** The method of any one of claims 1-13, wherein the intra mode of the current block is one of an intra prediction mode indicating a directional prediction in a set of directional predictions, a block-coded mode that uses a block vector or a matrix-based intra prediction mode.

**15.** An apparatus comprising one or more processors configured to implement the method of any one of claims 1-14.

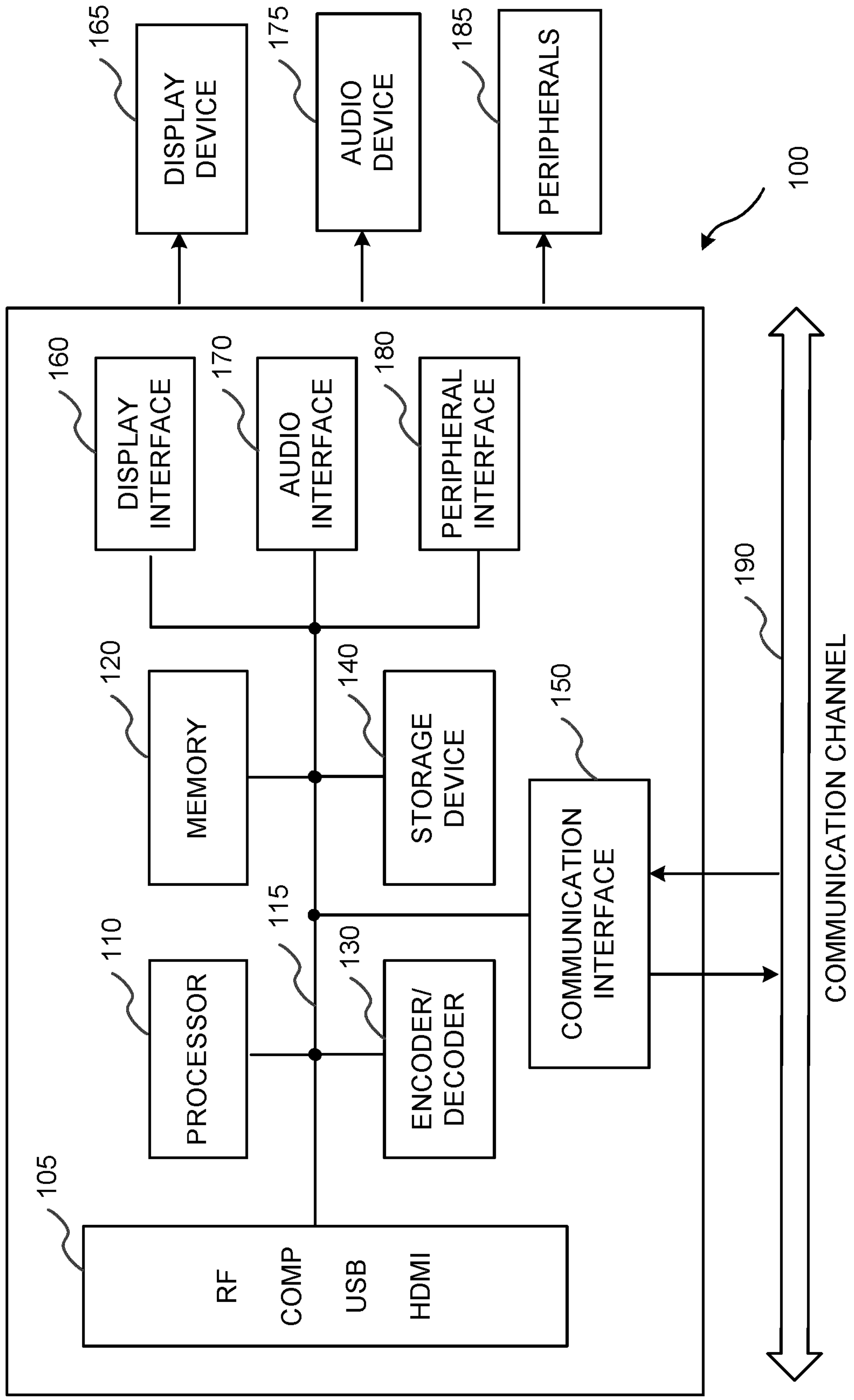
100
DISPLAY DEVICE
165
AUDIO DEVICE
175
PERIPHERALS
185
DISPLAY INTERFACE
160
AUDIO INTERFACE
170
PERIPHERAL INTERFACE
180
MEMORY
120
STORAGE DEVICE
140
COMMUNICATION INTERFACE
150
PROCESSOR
110
115
ENCODER/ DECODER
130
105
RF
COMP
USB
HDMI
190
COMMUNICATION CHANNEL

FIG. 1

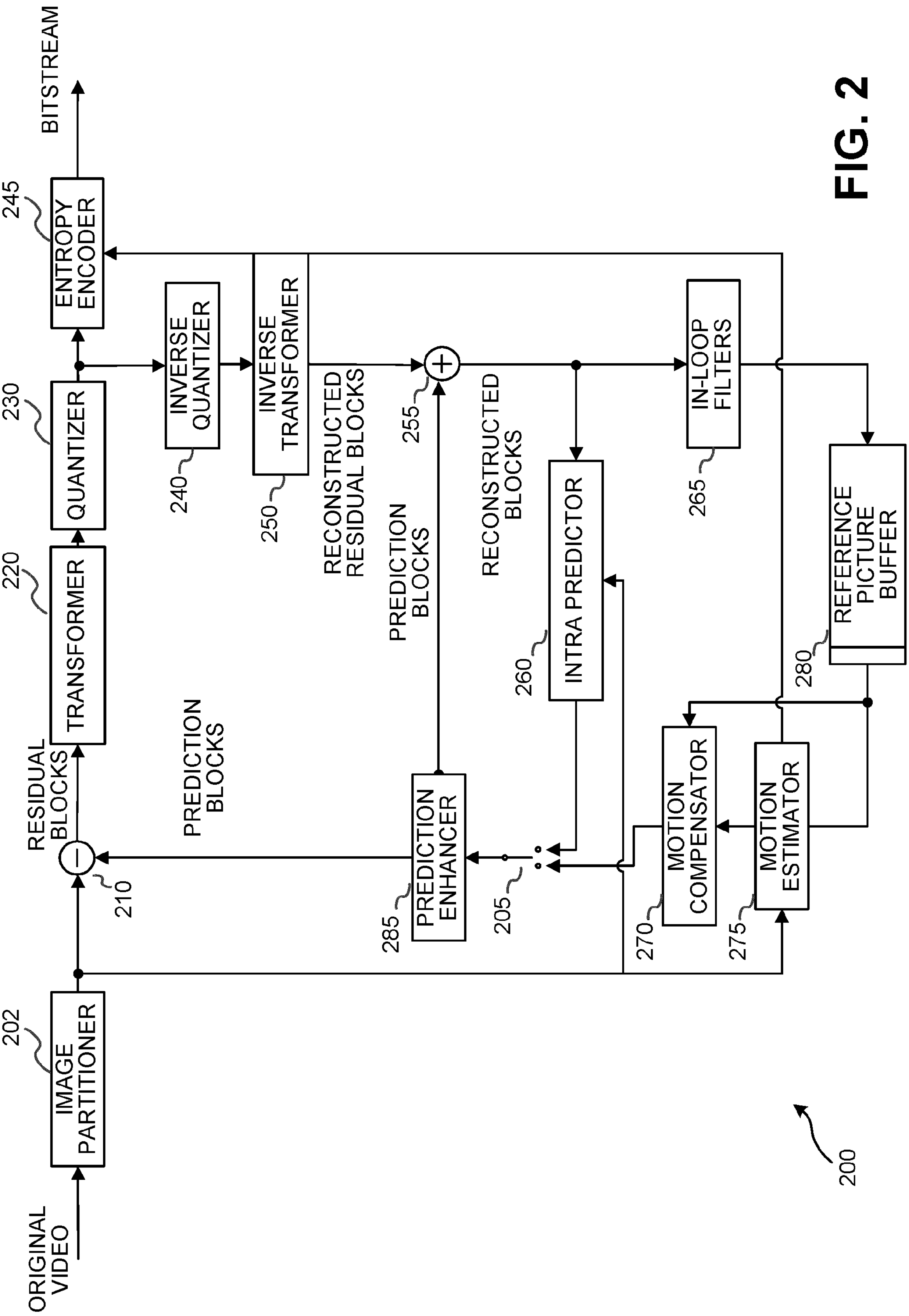
ORIGINAL VIDEO
202
IMAGE PARTITIONER
210
RESIDUAL BLOCKS
220
TRANSFORMER
230
QUANTIZER
245
ENTROPY ENCODER
BITSTREAM
240
INVERSE QUANTIZER
250
INVERSE TRANSFORMER
RECONSTRUCTED RESIDUAL BLOCKS
255
PREDICTION BLOCKS
PREDICTION BLOCKS
RECONSTRUCTED BLOCKS
260
INTRA PREDICTOR
265
IN-LOOP FILTERS
280
REFERENCE PICTURE BUFFER
285
PREDICTION ENHANCER
205
270
MOTION COMPENSATOR
275
MOTION ESTIMATOR
200

FIG. 2

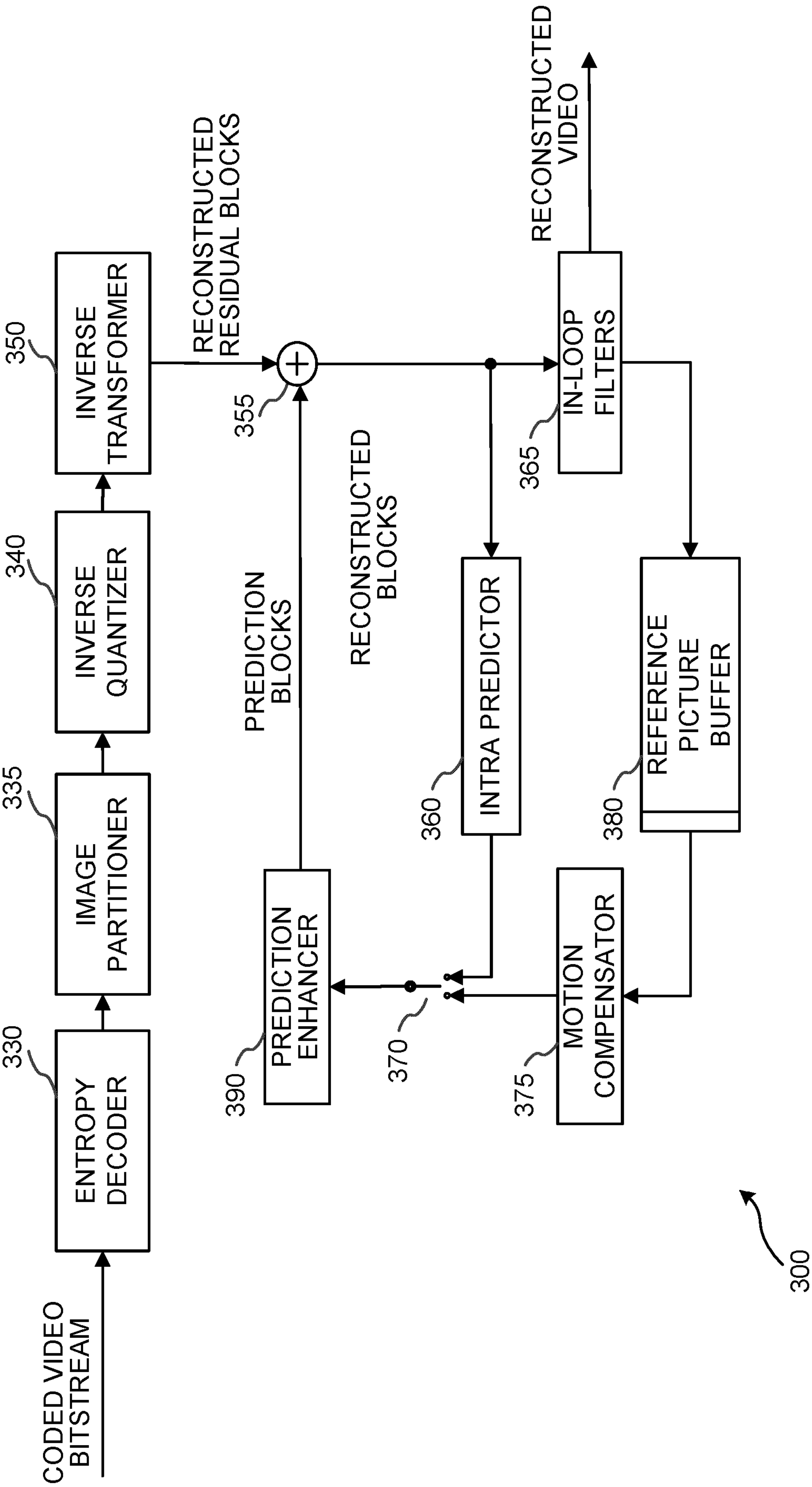
CODED VIDEO BITSTREAM
ENTROPY DECODER
330
IMAGE PARTITIONER
335
INVERSE QUANTIZER
340
INVERSE TRANSFORMER
350
RECONSTRUCTED RESIDUAL BLOCKS
355
PREDICTION BLOCKS
RECONSTRUCTED BLOCKS
PREDICTION ENHANCER
390
370
INTRA PREDICTOR
360
IN-LOOP FILTERS
365
RECONSTRUCTED VIDEO
REFERENCE PICTURE BUFFER
380
MOTION COMPENSATOR
375
300

FIG. 3

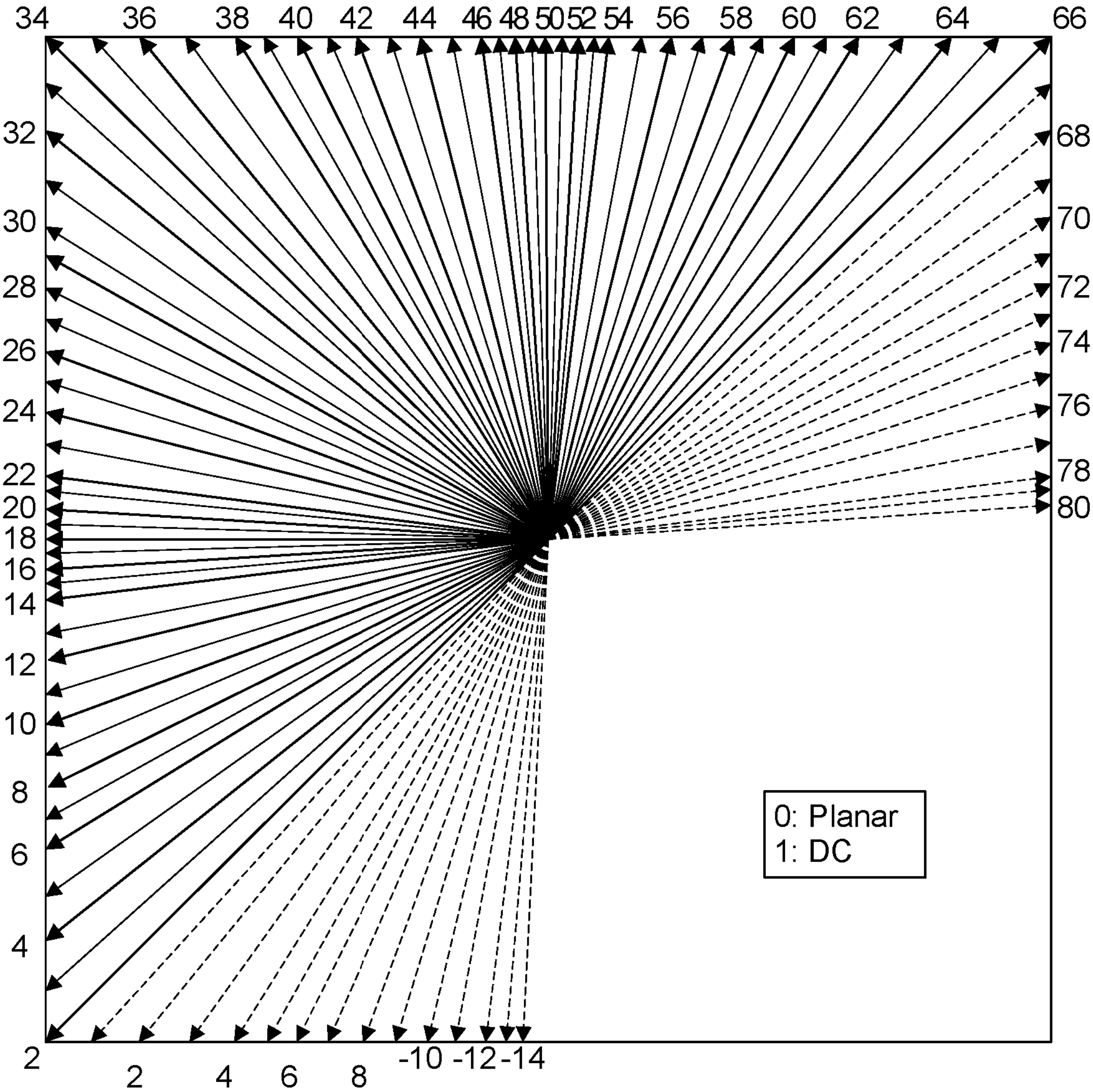
34
36
38
40
42
44
46
48
50
52
54
56
58
60
62
64
66
32
30
28
26
24
22
20
18
16
14
12
10
8
6
4
2
68
70
72
74
76
78
80
2
4
6
8
-10
-12
-14
0: Planar
1: DC

# FIG. 4

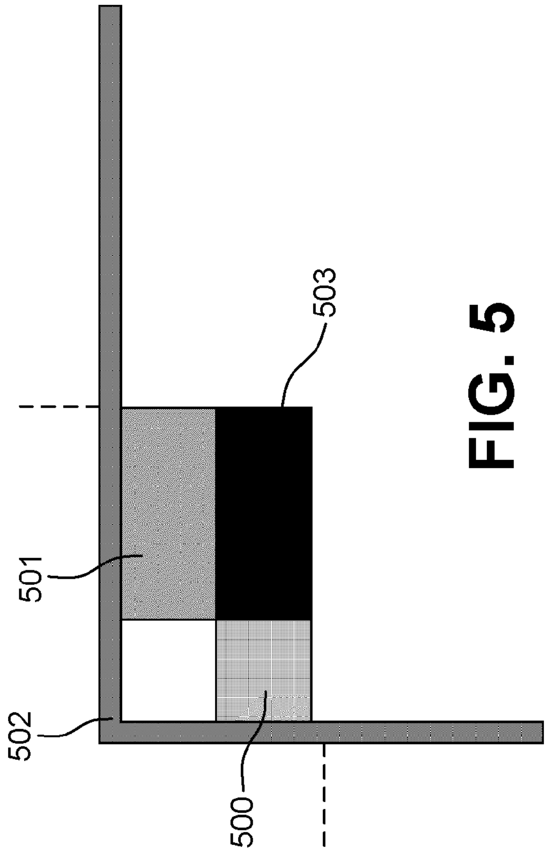
500
501
502
503

FIG. 5

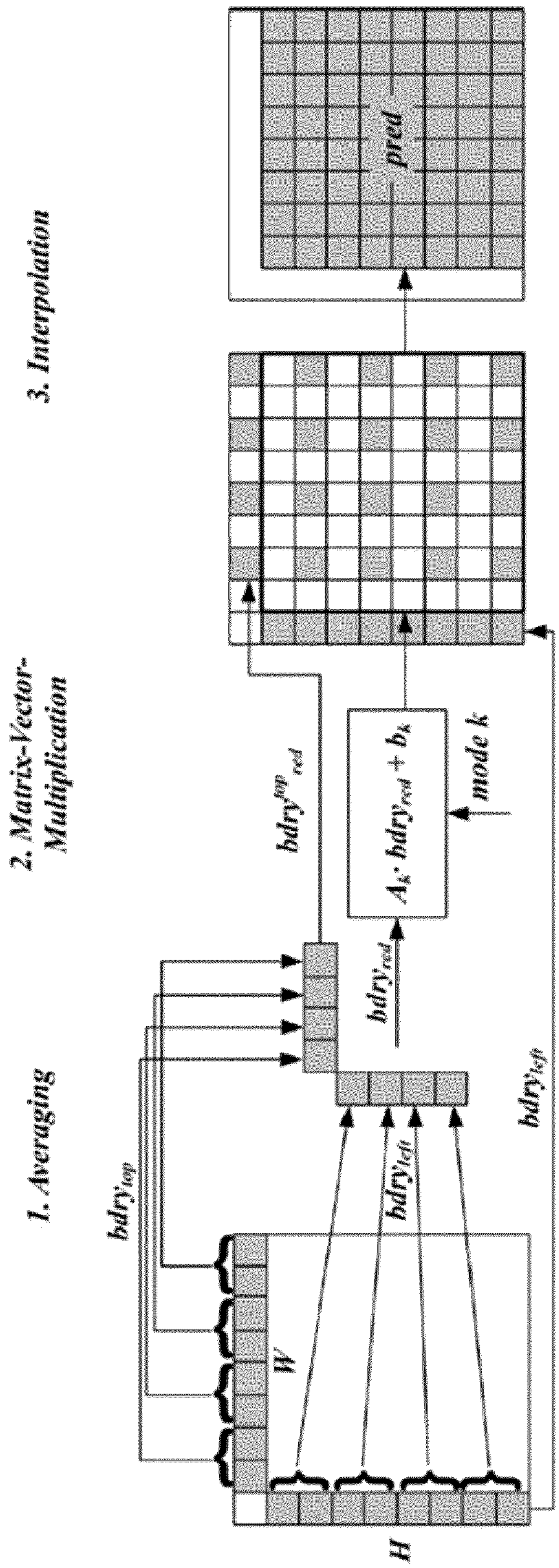
1. Averaging
2. Matrix-Vector-Multiplication
3. Interpolation
$bdry_{top}$
$bdry_{left}$
W
H
$bdry_{red}$
$bdry^{top}_{red}$
$A_k \cdot bdry_{red} + b_k$
mode k
$bdry_{left}$
pred

FIG. 6

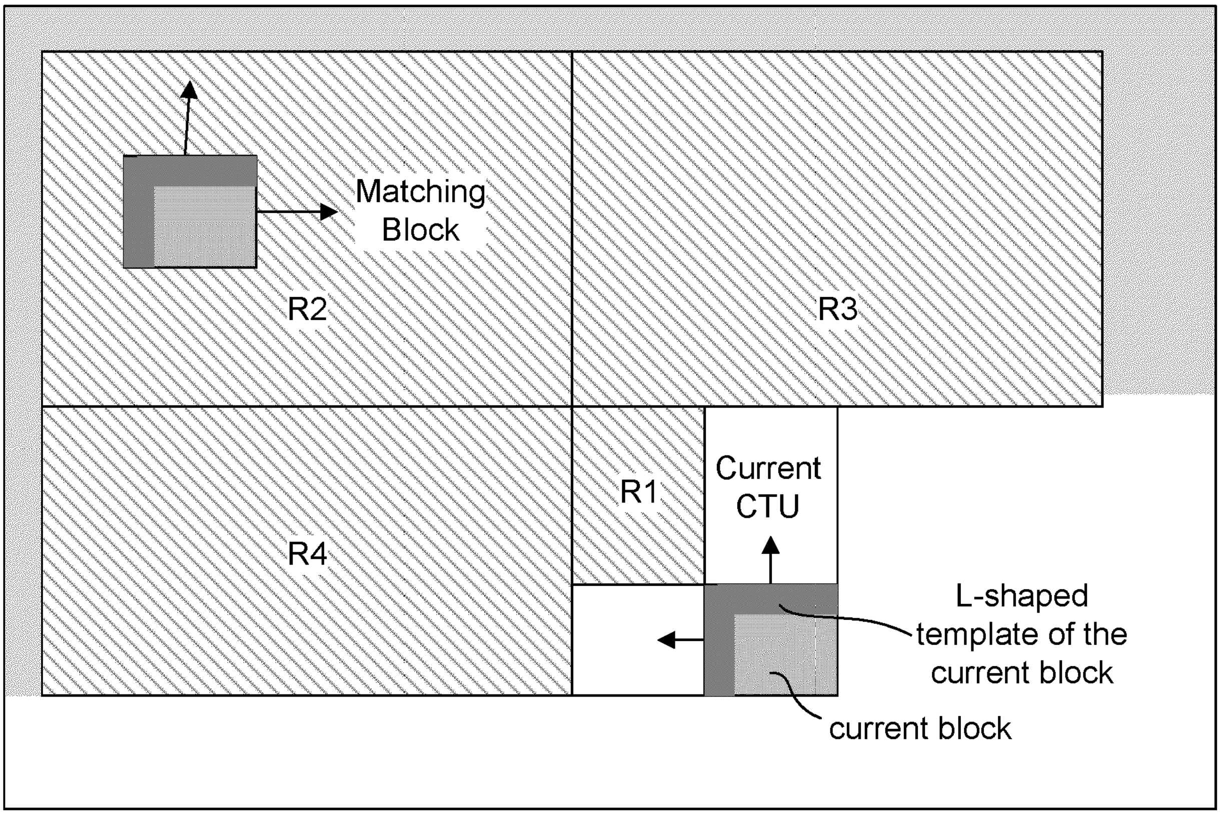
Matching Block
R2
R3
R1
Current CTU
R4
L-shaped template of the current block
current block

FIG. 7

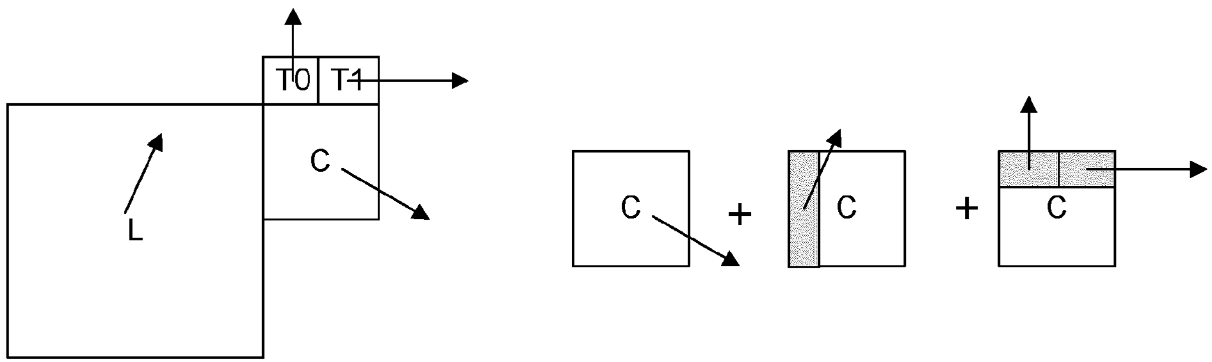
T0
T1
C
L
C
+
C
+
C

FIG. 8

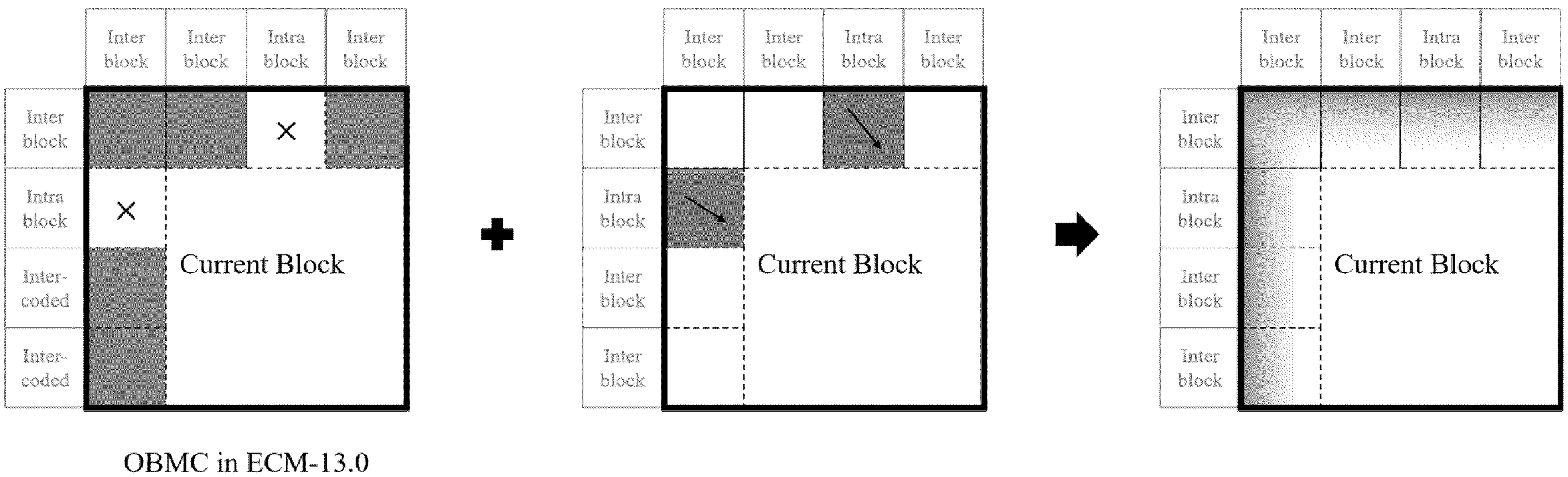
Inter block
Inter block
Intra block
Inter block
Inter block
Intra block
Inter-coded
Inter-coded
×
×
Current Block
OBMC in ECM-13.0
Inter block
Inter block
Intra block
Inter block
Inter block
Intra block
Inter block
Inter block
Current Block
Inter block
Inter block
Intra block
Inter block
Inter block
Intra block
Inter block
Inter block
Current Block

FIG. 9

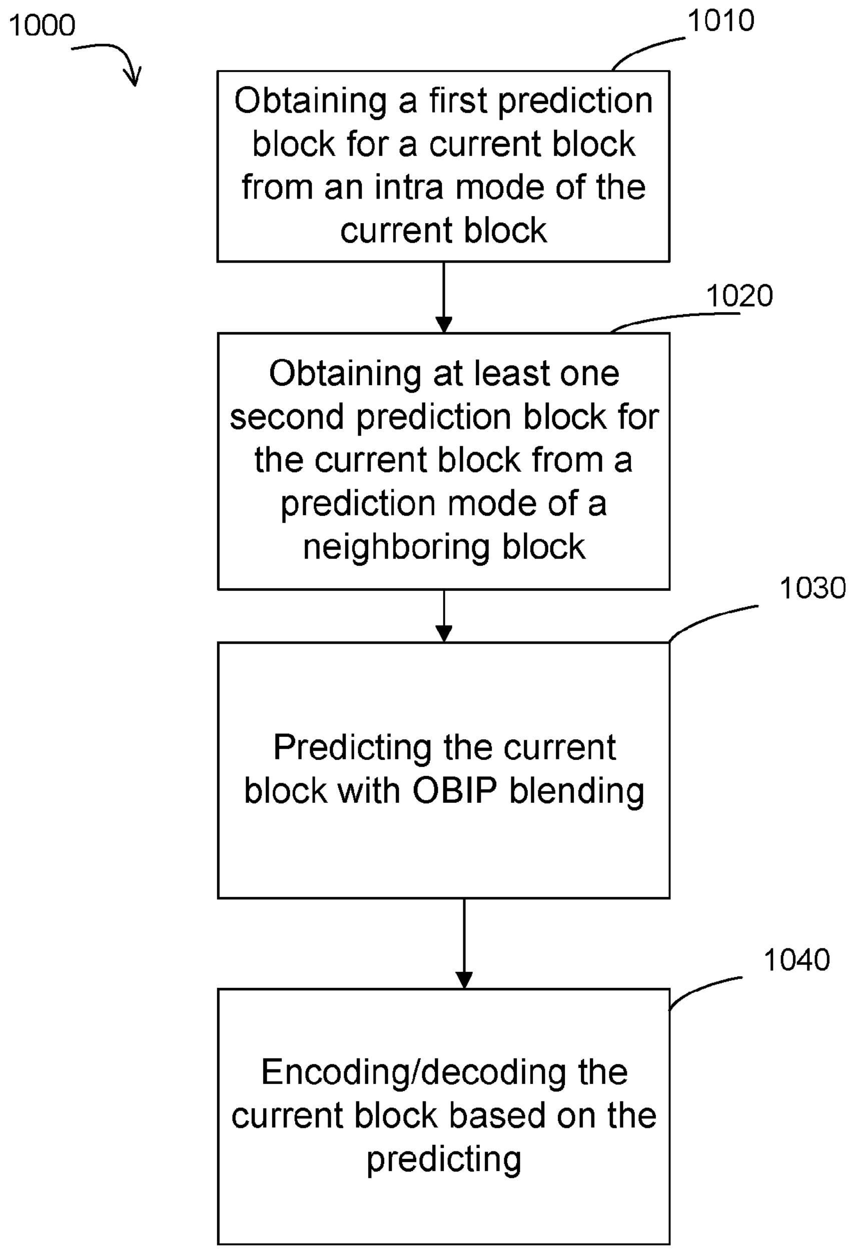
1000
1010
Obtaining a first prediction block for a current block from an intra mode of the current block
1020
Obtaining at least one second prediction block for the current block from a prediction mode of a neighboring block
1030
Predicting the current block with OBIP blending
1040
Encoding/decoding the current block based on the predicting

FIG. 10

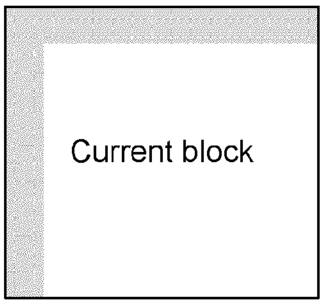
Current block

FIG. 11

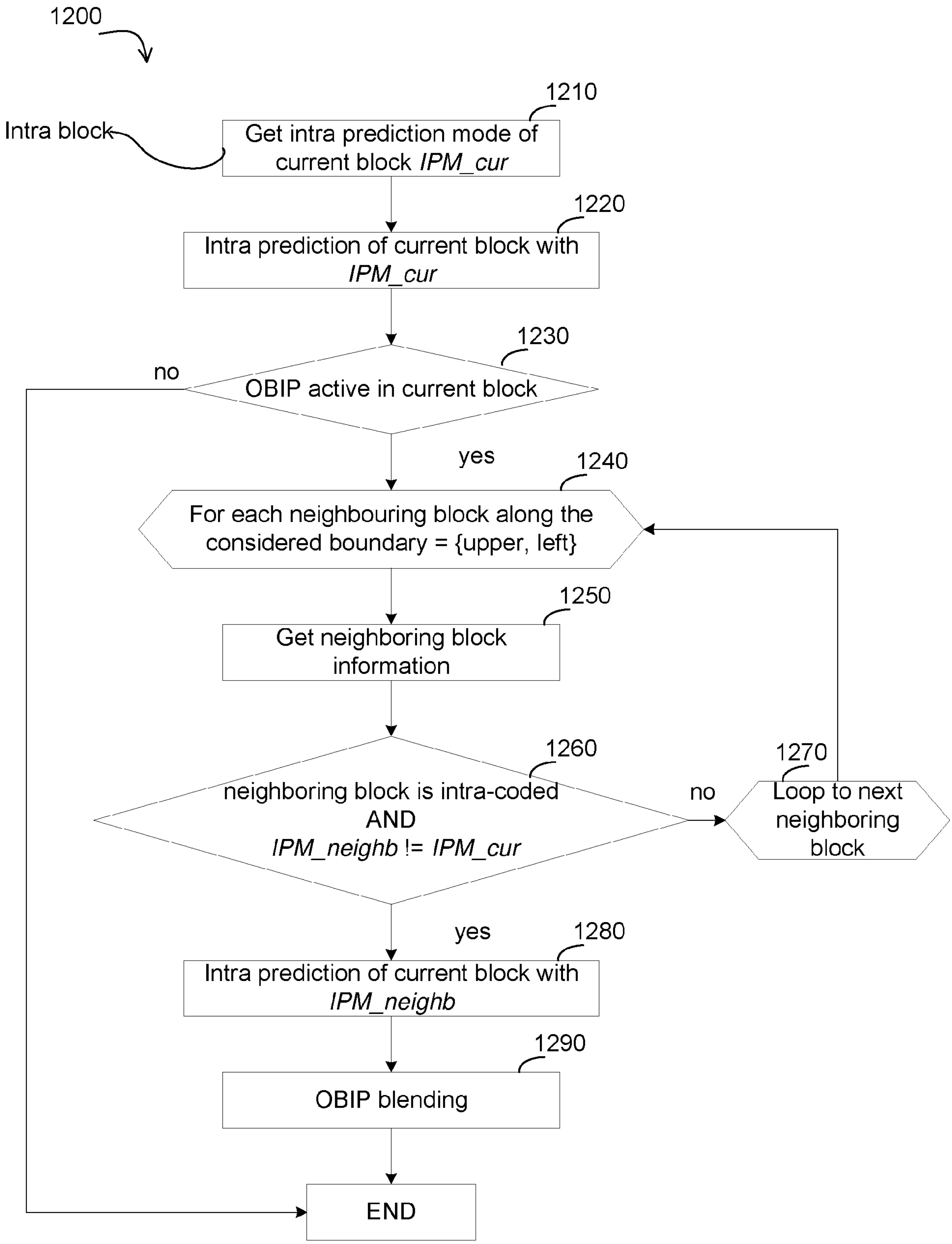
1200
Intra block
1210
Get intra prediction mode of current block IPM_cur
1220
Intra prediction of current block with IPM_cur
1230
OBIP active in current block
no
yes
1240
For each neighbouring block along the considered boundary = {upper, left}
1250
Get neighboring block information
1260
neighboring block is intra-coded AND IPM_neighb != IPM_cur
no
1270
Loop to next neighboring block
yes
1280
Intra prediction of current block with IPM_neighb
1290
OBIP blending
END

FIG. 12

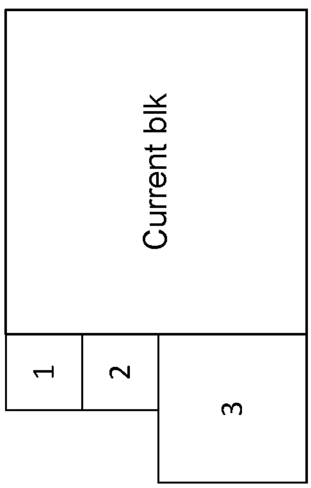

FIG. 13A

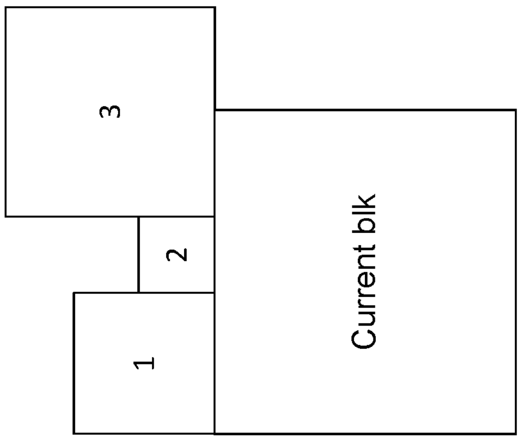

FIG. 13B

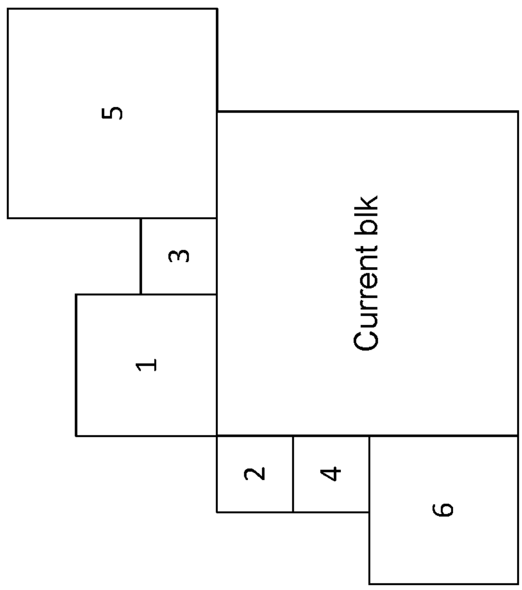

FIG. 13C

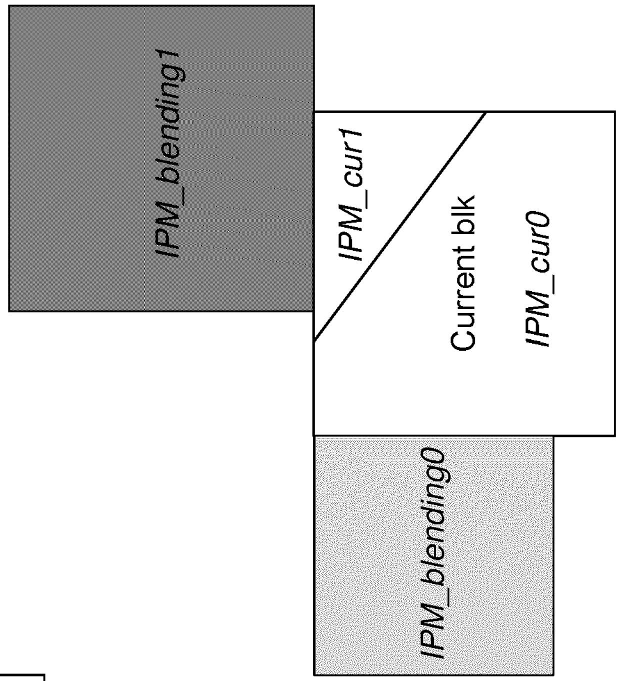

FIG. 14

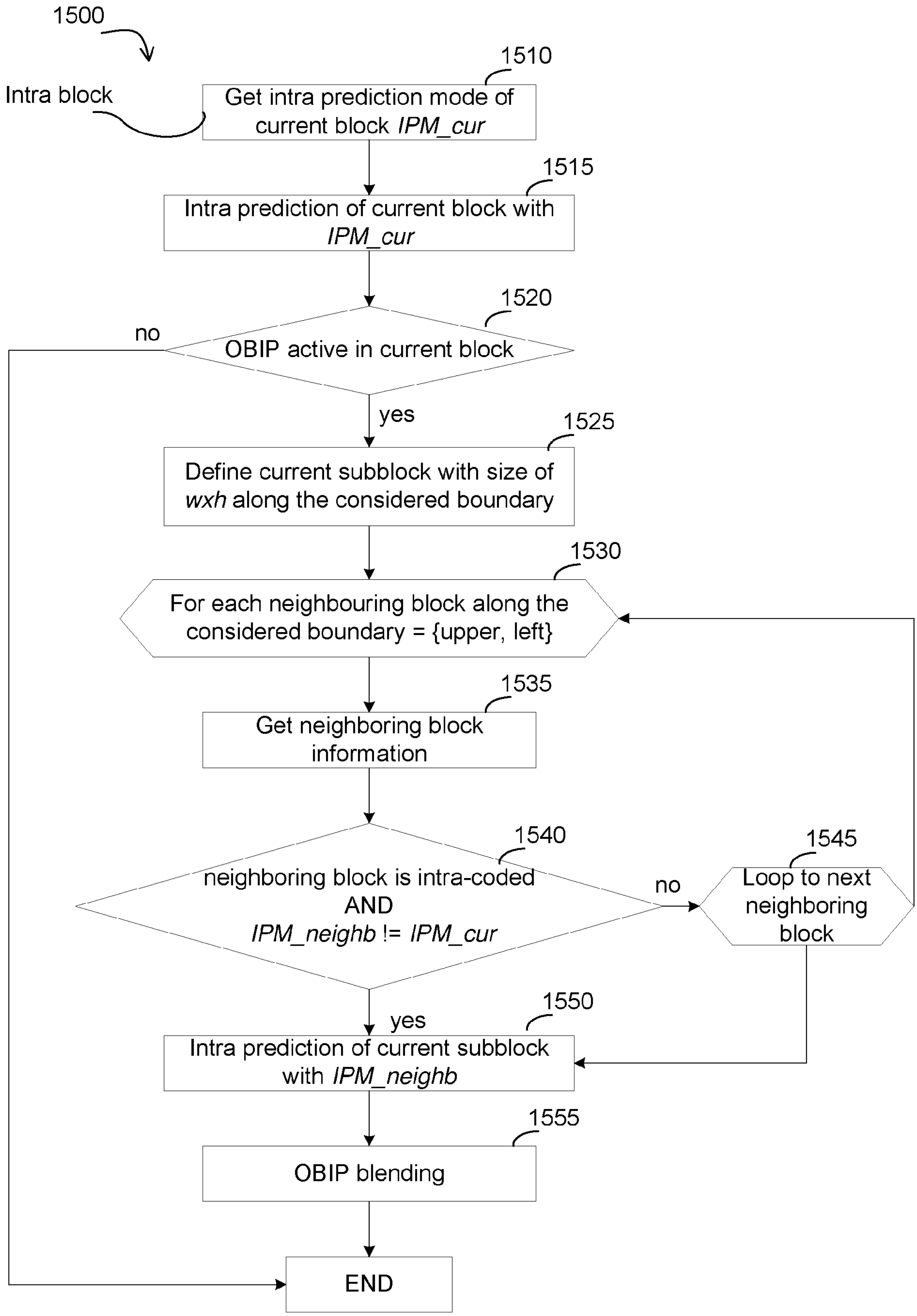
1500
Intra block
1510
Get intra prediction mode of current block IPM_cur
1515
Intra prediction of current block with IPM_cur
1520
OBIP active in current block
no
yes
1525
Define current subblock with size of wxh along the considered boundary
1530
For each neighbouring block along the considered boundary = {upper, left}
1535
Get neighboring block information
1540
neighboring block is intra-coded AND IPM_neighb != IPM_cur
no
1545
Loop to next neighboring block
yes
1550
Intra prediction of current subblock with IPM_neighb
1555
OBIP blending
END

FIG. 15

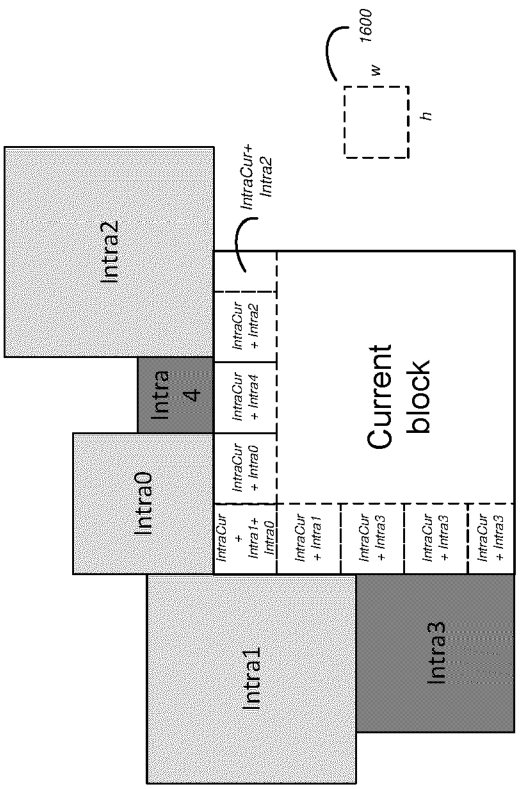


FIG. 16A

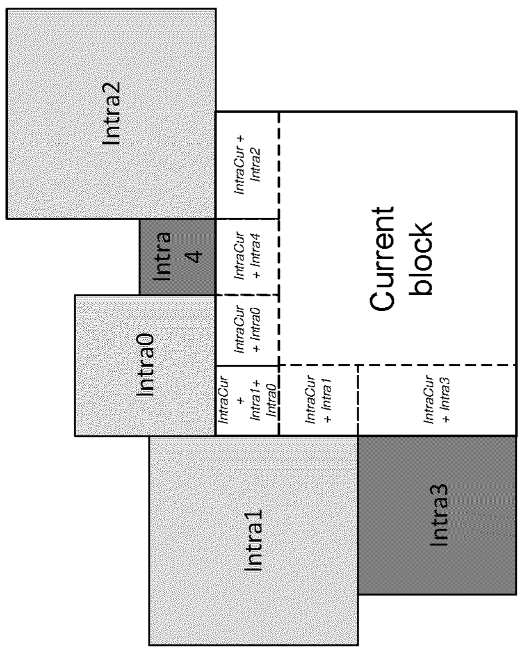


FIG. 16B

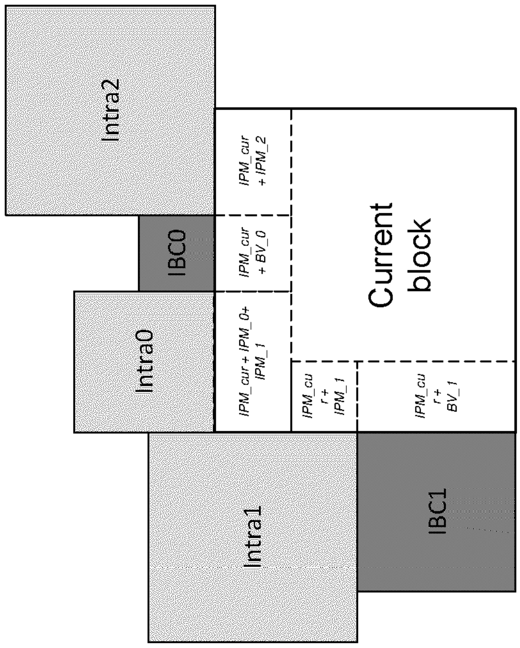


FIG. 16C

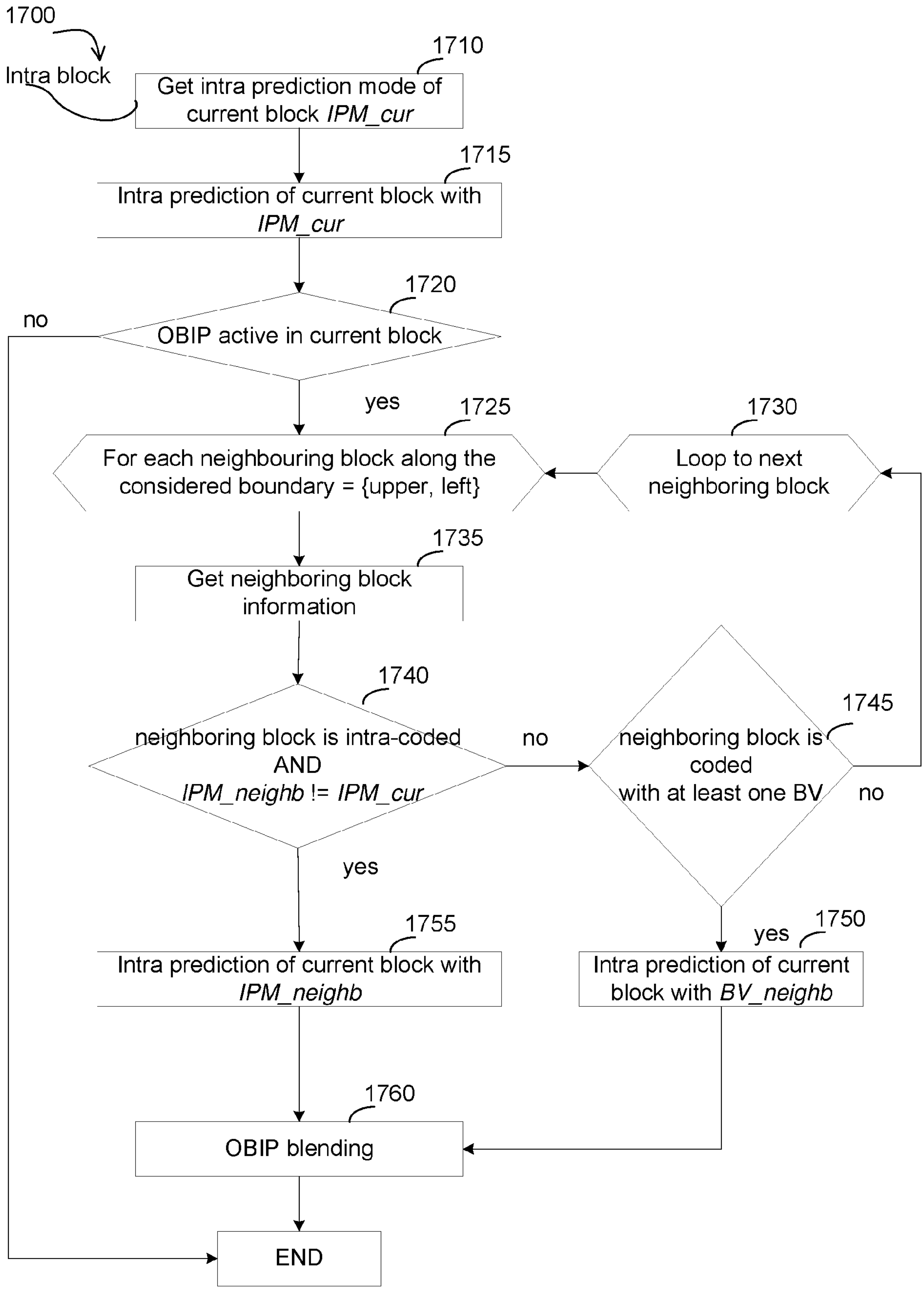
1700
Intra block
1710
Get intra prediction mode of current block IPM_cur
1715
Intra prediction of current block with IPM_cur
1720
OBIP active in current block
no
yes
1725
For each neighbouring block along the considered boundary = {upper, left}
1730
Loop to next neighboring block
1735
Get neighboring block information
1740
neighboring block is intra-coded AND IPM_neighb != IPM_cur
no
1745
neighboring block is coded with at least one BV
no
yes
1755
Intra prediction of current block with IPM_neighb
yes
1750
Intra prediction of current block with BV_neighb
1760
OBIP blending
END

FIG. 17

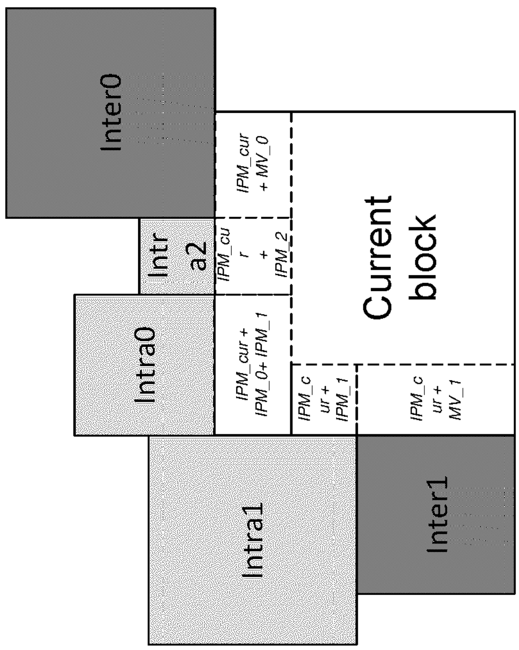


FIG. 18A

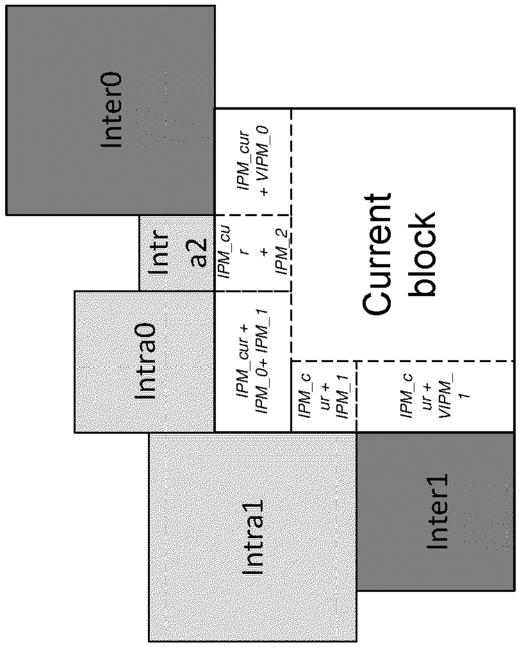


FIG. 18B

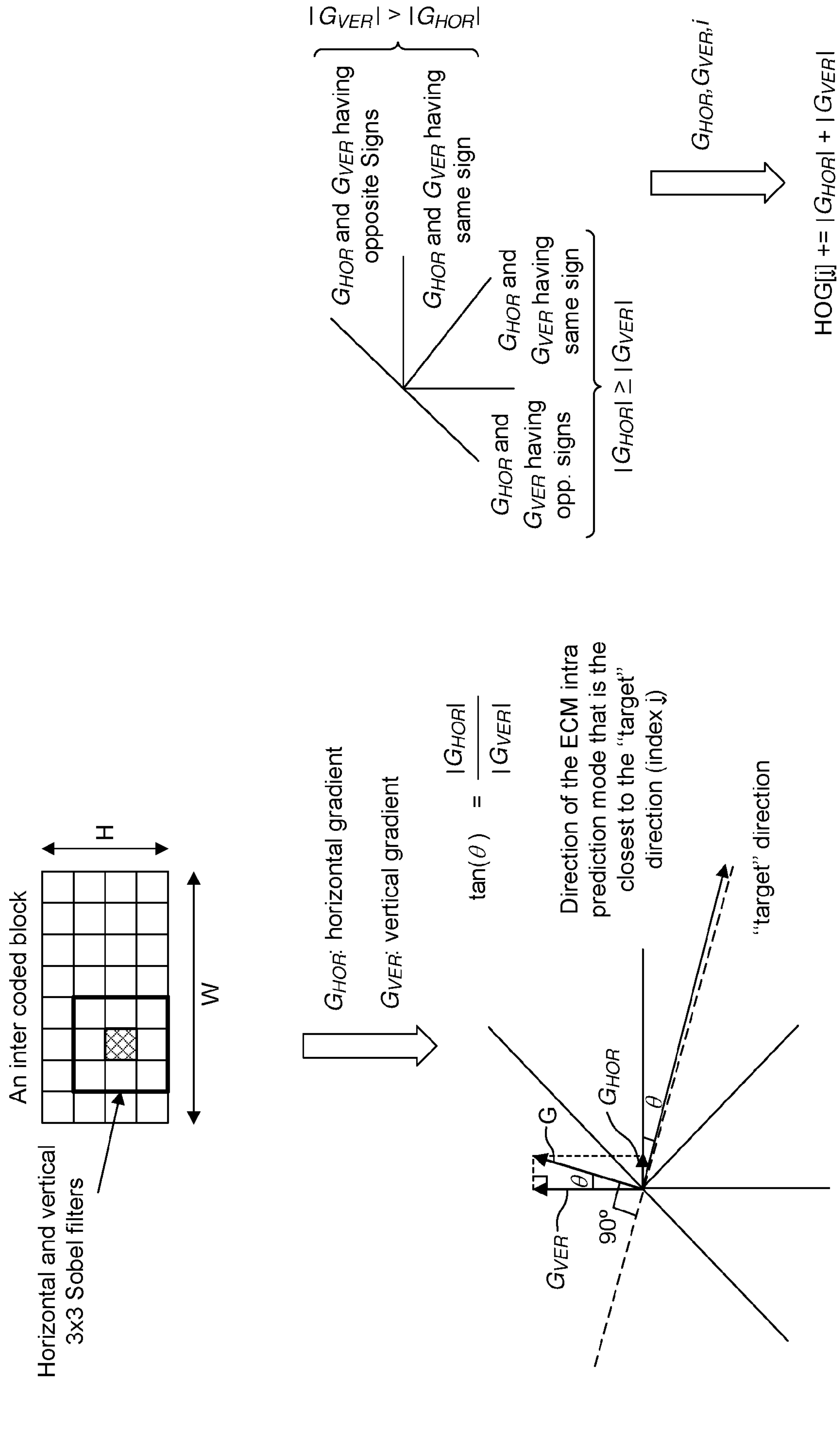

An inter coded block
Horizontal and vertical 3x3 Sobel filters
H
W
GHOR: horizontal gradient
GVER: vertical gradient
tan(θ) = |GHOR| / |GVER|
Direction of the ECM intra prediction mode that is the closest to the "target" direction (index j)
"target" direction
G
GVER
GHOR
90°
θ
GHOR and GVER having opposite Signs
GHOR and GVER having same sign
|GVER| > |GHOR|
GHOR and GVER having opp. signs
GHOR and GVER having same sign
|GHOR| ≥ |GVER|
GHOR, GVER, i
HOG[j] += |GHOR| + |GVER|


FIG. 19

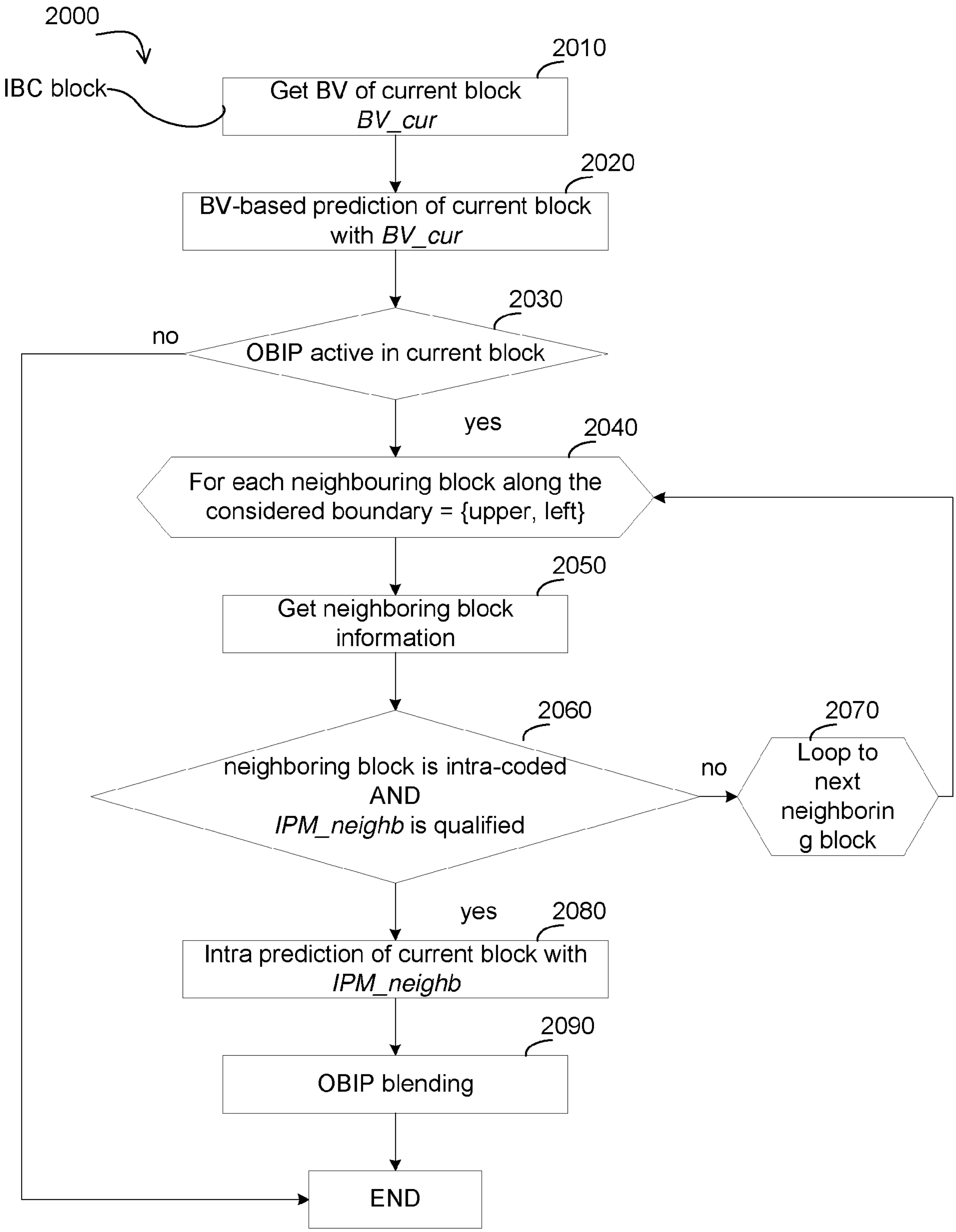
2000
IBC block
2010
Get BV of current block
BV_cur
2020
BV-based prediction of current block with BV_cur
2030
no
OBIP active in current block
yes
2040
For each neighbouring block along the considered boundary = {upper, left}
2050
Get neighboring block information
2060
neighboring block is intra-coded
AND
IPM_neighb is qualified
no
2070
Loop to next neighborin g block
yes
2080
Intra prediction of current block with IPM_neighb
2090
OBIP blending
END

FIG. 20

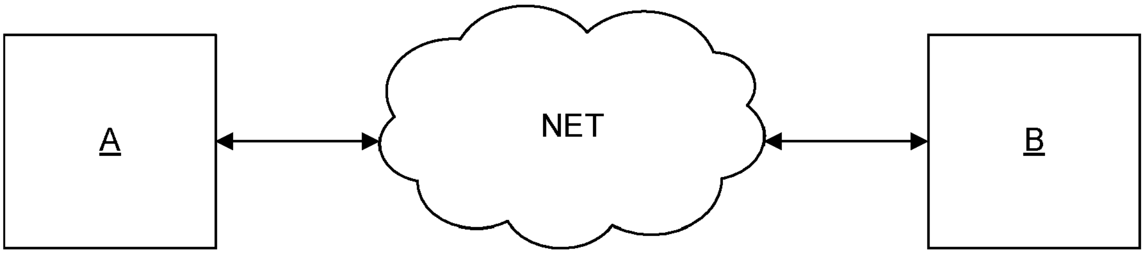


FIG. 21

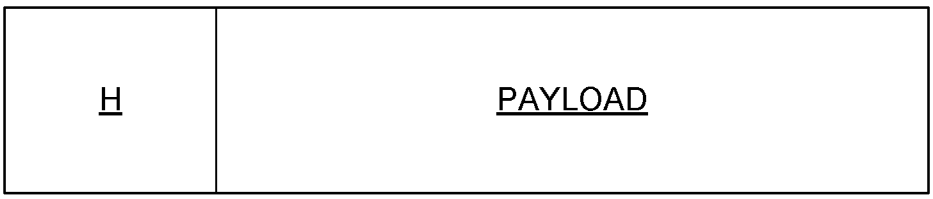


FIG. 22

Europäisches Patentamt
European Patent Office
Office européen des brevets

# EUROPEAN SEARCH REPORT

Application Number
EP 24 30 6702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/149017 A1 (MEDIATEK INC [CN]) 18 July 2024 (2024-07-18) * paragraph [0015] - paragraph [0019] * * paragraph [0069] - paragraph [0075] * * figures 4a, 5 * ----- | 1-15 | INV. H04N19/583 H04N19/593 |
| X | US 2024/297987 A1 (CHEN CHUN-CHI [US] ET AL) 5 September 2024 (2024-09-05) * paragraph [0158] - paragraph [0182] * ----- | 1-15 | |
| X | WO 2024/173443 A1 (BEIJING DAJIA INTERNET INFORMATION TECH CO LTD [CN]; MA CHANGYUE [US]) 22 August 2024 (2024-08-22) * paragraph [0392] - paragraph [0398] * ----- | 1-15 | |
| | | | TECHNICAL FIELDS SEARCHED (IPC) |
| | | | H04N |

The present search report has been drawn up for all claims

2

| Place of search | Date of completion of the search | Examiner |
|---|---|---|
| Munich | 6 March 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 30 6702

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2025

| Patent document cited in search report | Publication date | Patent family member(s) | Publication date |
|---|---|---|---|
| WO 2024149017 A1 | 18-07-2024 | NONE | |
| US 2024297987 A1 | 05-09-2024 | NONE | |
| WO 2024173443 A1 | 22-08-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Non-EE2: OBMC extension with intra prediction. *JVET-AI0154, 35th Meeting*, 12 July 2024
- **N M. COBAN** ; **R-L. LIAO** ; **K. NASER,** ; **J. STRÖM, L**. Algorithm description of Enhanced Compression Model 13 (ECM13). *JVET-AH2025*, 17 April 2024
- Non-EE2: on LFNST/NSPT for inter coding. *JVET-AF0082*, 13 October 2023